# EUROPÄISCHE PATENTSCHRIFT

(11) **EP 0 414 640 B1**
(45) Veröffentlichungstag und Bekanntmachung des Hinweises auf die Patenterteilung: **15.11.1995**
(21) Anmeldenummer: 90810613.1
(22) Anmeldetag: 15.08.1990
(51) Int. Cl.: C07F 7/18, C08G 18/10, C08G 18/38, C09D 175/12

(54) **Iminosilane**
Iminosilanes
Iminosilanes

(30) Priorität: 24.08.1989 CH 3069/89
(43) Veröffentlichungstag der Anmeldung: 27.02.1991
(73) Patentinhaber: CIBA-GEIGY AG, 4002 Basel (CH)
(72) Erfinder: Parrinello, Giovanni, Dr., B-3080 Duisburg (BE); Mülhaupt, Rolf, Dr., D-7800 Freiburg i.Br. (DE)

(56) Entgegenhaltungen:
- EP-A- 0 297 602
- EP-A- 0 376 890
- EP-A- 0 406 160
- US-A- 4 316 041

## Beschreibung

Die vorliegende Erfindung betrifft neue Iminosilane, härtbare Zusammensetzungen enthaltend Polyisocyanate und diese Silane, die daraus erhältlichen gehärteten Produkte, sowie die Verwendung der neuen Verbindungen zur Herstellung von Ueberzügen, Klebstoffen und Beschichtungen.

Die Verwendung von Iminosilanen als Haftvermittler in härtbaren Polyurethanzusammensetzungen, die sich zur Glasverklebung eignen, ist an sich bekannt. So werden beispielsweise in der DE-A-3,414,877 Polyurethanzubereitungen beschrieben, die einen eingebauten Haftvermittler auf Basis von aldimin- oder ketimingruppenhaltigen Alkyloxysilanen enthalten. Damit lassen sich Einkomponenten-Polyurethanzusammensetzungen herstellen, die ohne Voranstrichmittel (Primer) eingesetzt werden können. Die offenbarten Haftvermittler leiten sich von Aldehyden ab, welche am zur Aldehydgruppe α-ständigen C-Atom Wasserstoffatome aufweisen.

In der DE-3,624,924 werden Polyurethanhärter auf der Basis von Aldiminen beschrieben. Die Verbindungen leiten sich von Aldehyden ab, die keine Wasserstoffatome am zur Aldehydgruppe α-ständigen C-Atom aufweisen. Die Verbindungen weisen keine Silangruppen auf und besitzen in der Regel keine haftvermittelnden Eigenschaften.

Die EP-A-406,160 offenbart Iminosilane und Aminalsilane, die durch Umsetzung von Polyisocyanaten oder Polyisothiocyanaten mit Aminalen und/oder Imin-Aminen und Amino- oder Mercapto-alkoxysilanen hergestellt werden können und als Haftvermittler für Polyurethanharze geeignet sind. Mit diesen Haftvermittlern wird eine sehr gute Haftung auf Glas, Metall, lackiertem Stahl und Kunststoffen erzielt.

Es wurden jetzt ausgewählte Iminosilane gefunden, die sich als Haftvermittler einsetzen lassen. Mit diesen Iminosilanen lassen sich lagerstabile und unter dem Einfluss von Feuchtigkeit rasch härtbare Polyurethanzusammensetzungen mit sehr guten Hafteigenschaften auf einer Reihe von Substraten, insbesondere auf Glasoberflächen, herstellen. Dabei wird eine Beschleunigung der Härtungsreaktion festgestellt, die besonders bei den polyfunktionellen Iminosilanen ausgeprägt ist.

Dies ist als überraschend anzusehen, da üblicherweise bei einer hohen Härtungsgeschwindigkeit die Haftung des gehärteten Produktes zu wünschen übrig lässt.

Die vorliegende Erfindung betrifft Verbindungen der allgemeinen Formel Ia oder Ib 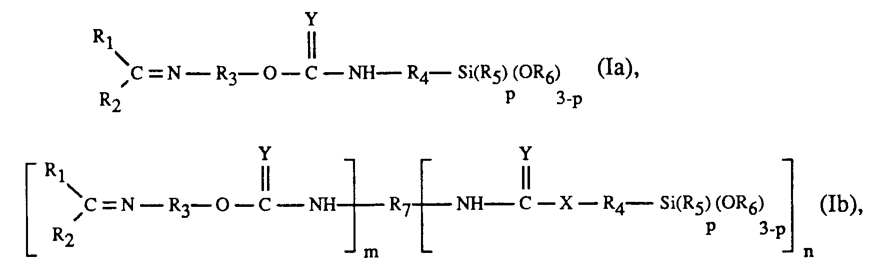
worin R₁ Alkyl, Cycloalkyl oder Aralkyl ist, das zumindest am α-C-Atom gegenüber Isocyanatgruppen inerte Substituenten aufweist, so dass an diesem C-Atom kein Wasserstoffatom vorhanden ist, R₂ eine der für R₁ definierten Bedeutungen annimmt oder Wasserstoff ist, oder R₁ und R₂ zusammen mit dem gemeinsamen C-Atom einen Cyclohexylenring bilden, der an den beiden C-Atomen gegenüber Isocyanatgruppen inerte Substituenten aufweist, R₃ Alkylen oder Cycloalkylen ist, Y -O- oder -S- bedeutet, R₄ Alkylen oder Cycloalkylen ist, R₅ Alkyl, Alkenyl, Cycloalkyl, Aryl oder Aralkyl bedeutet, R₆ Alkyl oder Cycloalkyl ist oder zwei Reste R₆ zusammen auch eine Alkylenkette bilden können, p 0, 1 oder 2 ist, m 1 oder 2 ist, n eine ganze Zahl von 1 bis 5 ist, R₇ ein m+n-wertiger linearer oder verzweigter Rest eines Polyisocyanats nach dem Entfernen der Isocyanatgruppen ist und X -S- oder -NH- bedeutet, wobei die Reste R₃ bis R₇ unabhängig voneinander entweder unsubstituiert sind oder gegenüber Isocyanatgruppen inerte Substituenten aufweisen, wobei in Alkylresten R₁, R₂, R₅ und/oder R₆ und/oder in Alkylenresten R₃, R₄ und/oder R₇ ein oder mehrere Kohlenstoffatome durch Sauerstoffatome ersetzt sein können, so dass Polyalkylenglykolreste auftreten, und wobei in cyclischen Resten R₁ bis R₇ ein bis drei Kohlenstoffatome durch Sauerstoff-, Schwefel- und/oder Stickstoffatome ersetzt sein können.

Sind irgendwelche Reste R₁ oder R₂ Alkyl, so weisen diese zumindest am α-C-Atom zwei, insbesondere insgesamt zwei bis vier, gegenüber Isocyanatgruppen inerte Substituenten, wie Alkylgruppen, auf.

Dabei handelt es sich vorzugsweise um Reste der Formel II 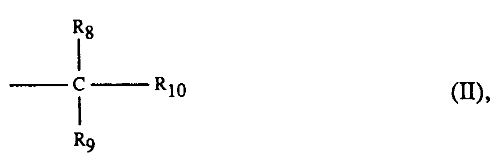
worin R₈ und R₉ gleiches oder unterschiedliches C₁-C₆Alkyl bedeuten und R₁₀ C₁-C₁₂Alkyl ist oder R₁₀ einen der Reste der Formeln IIIa, IIIb oder IIIc darstellt

―O―R₁₁ _{(IIIa),}

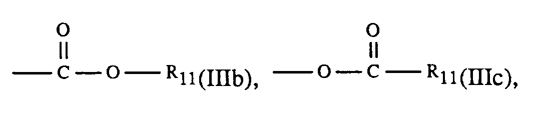

worin R₁₁ C₁-C₁₂Alkyl, Cyclohexyl, Phenyl oder Benzyl bedeutet.

Beispiele für geeignete Reste R₁ und R₂ sind tert.Butyl, 1,1,3,3-Tetramethylpentyl, 1-(n-Butyloxy)-1-methylethyl, 1-(2-Ethylhexyloxy)-1-methylethyl, 1-(Methoxycarbonyl)-1-methylethyl und 1-(Methylcarbonyloxy)-1-methylethyl. Bevorzugt wird tert.Butyl.

Sind irgendwelche Reste R₁ oder R₂ Cycloalkyl, so sind diese in jedem Falle zumindest am α-C-Atom substituiert, beispielsweise mit Alkyl. Ein Beispiel dafür ist 1-Methylcyclohex-1-yl.

Ein Beispiel für R₁ und R₂, die zusammen mit dem gemeinsamen C-Atom einen Cyclohexylenring bilden, der an den beiden C-Atomen gegenüber Isocyanatgruppen inerte Substituenten aufweist, ist 2,2,6,6-Tetramethylcyclohexyl.

Bedeuten irgendwelche Reste R₁ oder R₂ Aralkyl, so handelt es sich dabei in der Regel um Reste mit sieben bis zwölf Kohlenstoffatomen, die zumindest am α-C-Atom mit gegenüber Isocyanatgruppen inerten Resten, insbesondere mit Alkylresten, substituiert sind.

Ein Beispiel dafür ist α,α-Dimethylbenzyl.

Bedeuten R₃ oder R₄ Alkylen, so handelt es sich dabei in der Regel um Alkylengruppen mit einem bis zwölf Kohlenstoffatomen.

Beispiele für Alkylenreste sind Methylen, Ethylen, Tri-, Tetra-, Penta-, Hexa-, Hepta-, Octa-, Nona-, Deca-, Undeca- und Dodecamethylen. Bevorzugt werden Tetra-, Hexa- und Octamethylen.

Bilden zwei Reste R₆ zusammen eine Alkylenkette, so handelt es sich dabei in der Regel um Tri- oder um Tetramethylen.

Bedeuten R₃ oder R₄ Cycloalkylen, so handelt es sich dabei in der Regel um Cycloalkylengruppen mit fünf oder sechs Ringkohlenstoffatomen, die gegebenenfalls auch Teil einer Alkylenkette sein können.

Beispiele für Cycloalkylenreste sind Cyclopentylen, Cyclohexylen, Methylcyclohexylen, 1,4-Bis-methylen-cyclohexan oder 3,5,5-Trimethyl-3-methylen-cyclohex-1-yl.

Bedeuten irgendwelche Reste R₅ oder R₆ Alkyl, so handelt es sich dabei um verzweigte oder insbesondere um geradkettige Reste. Die Alkylgruppe weist im allgemeinen ein bis zwölf Kohlenstoffatome auf. Bevorzugt werden geradkettige Alkylreste mit ein bis sechs Kohlenstoffatomen, insbesondere Methylreste.

Beispiele für Alkylreste sind Methyl, Ethyl, n-Propyl, Isopropyl, n-Butyl, sek.Butyl, tert.Butyl, n-Pentyl, n-Hexyl, n-Heptyl, n-Octyl, 2-Ethylhexyl, n-Nonyl, n-Decyl, n-Undecyl und n-Dodecyl.

Bedeuten irgendwelche Reste R₅ Alkenyl, so handelt es sich dabei um verzweigte oder insbesondere um geradkettige Reste. Alkenylreste weisen im allgemeinen zwei bis sechs Kohlenstoffatome auf. Beispiele für Alkenylreste sind Vinyl, Prop-1-enyl, Prop-2-enyl, n-But-3-enyl, n-Pent-4-enyl oder n-Hex-5-enyl. Bevorzugt werden geradkettige Alkenylreste mit zwei oder drei Kohlenstoffatomen, insbesondere Vinyl, Prop-1-enyl oder Prop-2-enyl (Allyl).

Bedeuten irgendwelche Reste R₅ oder R₆ Cycloalkyl, so handelt es sich dabei im allgemeinen um Gruppen mit fünf bis acht Ringkohlenstoffatomen. Bevorzugt wird Cyclohexyl.

Beispiele für Cycloalkylreste sind Cyclopentyl, Cyclohexyl, Cycloheptyl oder Cyclooctyl.

Bedeuten irgendwelche Reste R₅ Aryl, so handelt es sich dabei im allgemeinen um aromatische Kohlenwasserstoffreste mit sechs bis vierzehn, insbesondere sechs, Kohlenstoffatomen. Beispiele für Arylreste sind Phenyl, Naphthyl, Biphenyl oder Anthryl. Bevorzugt wird Phenyl.

Bedeuten irgendwelche Reste R₅ Aralkyl, so handelt es sich dabei in der Regel um Gruppen mit sieben bis zwölf Kohlenstoffatomen. Beispiele für Aralkylreste sind Benzyl, α-Methylbenzyl und α,α-Dimethylbenzyl.

R₇ als m+n-wertiger Rest eines Polyisocyanats nach dem Entfernen der Isocyanatgruppen, kann im Prinzip ein beliebiger aliphatischer, cycloaliphatischer, aromatischer oder araliphatischer Rest sein.

Im Rahmen dieser Beschreibung ist unter dem Begriff "Polyisocyanat" auch den Begriff "Polyisothiocyanat" zu verstehen.

Das dem Rest R₇ zugrundeliegende Polyisocyanat kann eine niedermolekulare Verbindung oder ein Präpolymeres sein. Unter einer "niedermolekularen Verbindung" ist im Rahmen dieser Beschreibung eine Verbindung mit einem Molekulargewicht von weniger als etwa 1'000 zu verstehen. Unter einem "Präpolymeren" ist im Rahmen dieser Beschreibung eine Verbindung mit einem Molekulargewicht (Zahlenmittel) von etwa 1'000 bis 20'000 zu verstehen.

Der Rest R₇ leitet sich beispielsweise von einem niedermolekularen aliphatischen, cycloaliphatischen, aromatischen oder araliphatischen Polyisocyanat ab, das mehrere, insbesondere zwei bis etwa vier, Isocyanatgruppen pro Molekül enthält, oder von einem isocyanat-terminierten Addukt eines solchen Polyisocyanats an Verbindungen, insbesondere an präpolymere Verbindungen, die mehrere, insbesondere zwei bis etwa vier, Gruppen mit aktiven Wasserstoffatomen, wie Amino-, Säure- oder insbesondere Hydroxylgruppen, enthalten.

Beispiele für niedermolekulare aliphatische Reste R₇ sind Alkylenreste, insbesondere Reste mit zwei bis zwölf C-Atomen, wie sie bereits weiter oben beschrieben wurden.

Beispiele für niedermolekulare cycloaliphatische Reste R₇ sind Cycloalkylenreste mit fünf oder insbesondere sechs Ringkohlenstoffatomen, die auch Teil einer Alkylenkette sein können, wie sie bereits weiter oben beschrieben wurden.

Beispiele für niedermolekulare aromatische Reste R₇ sind Arylenreste, wie zweiwertige aromatische Kohlenwasserstoffreste mit sechs bis vierzehn, insbesondere sechs, Kohlenstoffatomen. Mehrere solcher Arylenreste können auch über Brückenglieder, wie eine direkte C-C-Bindung, -O-, -S- oder -CH₂-, miteinander verbunden sein. Beispiele für Arylenreste sind 1,3- oder 1,4-Phenylen und Methylen-bis-(phen-4-yl).

Ein Beispiel für einen niedermolekularen araliphatischen Rest R₇ ist Xylylen.

Ist R₇ der Rest eines präpolymeren Polyisocyanats, so leitet sich dieser beispielsweise von einem präpolymeren hydroxyl-terminierten Polyester oder Polyether ab, dessen Endgruppen mit einem niedermolekularen Di- oder Triisocyanat verkappt sind. Beispiele für solche Präpolymeren sind weiter unten aufgeführt.

In den Alkylresten R₁, R₂, R₅ und/oder R₆ und/oder in den Alkylenresten R₃, R₄ und/oder R₇ können ein oder mehrere Kohlenstoffatome durch Sauerstoffatome ersetzt sein, so dass Polyalkylenglykolreste auftreten. Beispiele für derartig modifizierte Alkylenketten sind Reste, die sich von Polyalkylenglykolen ableiten. Beispiele für derartig modifizierte Alkylreste sind Derivate, die sich von Polyalkylenglykolmonoalkylethern ableiten.

Beispiele für solche Reste R₃ und R₄ sind Reste von mono-amino-terminierten Polyalkylenglykolen.

Ist R₇ ein Alkylenrest, worin ein oder mehrere C-Atome durch O-Atome ersetzt sind, so handelt es sich dabei beispielsweise um einen Polyoxyalkylenglykolrest, insbesondere um einen Polyoxypropylenglykolrest oder einen Polyoxybutylenglykolrest.

Sind in irgendwelchen cyclischen Resten R₁ bis R₇ ein bis drei Kohlenstoffatome durch Sauerstoff-, Schwefel- und/oder Stickstoffatome ersetzt, so kann es sich dabei um aromatische oder um nicht aromatische heterocyclische Systeme handeln, die vorzugsweise fünf- oder sechsgliedrig sind. Im Falle von heterocyclischen Systemen sind vorzugsweise ein bis drei Ringkohlenstoffatome durch Stickstoffatome oder ein oder zwei Ringkohlenstoffatome durch Sauerstoff- oder Schwefelatome ersetzt. Es können auch unterschiedliche Heteroatome in einem Ring auftreten, beispielsweise ein Stickstoff-und ein Sauerstoffatom.

Die Definition "ein bis drei Kohlenstoffatome sind durch Sauerstoff-, Schwefel- und/oder Stickstoffatome ersetzt" umfasst auch solche heterocyclischen Systeme, bei denen die Ringheteroatome neben der Einbindung in das Ringsystem noch ihrerseits zusätzliche Atome oder Substituenten tragen. Beispiele für solche Heterogruppen sind - NH- oder -N(Alkyl)-.

Ist R₇ ein cyclischer Rest, worin ein bis drei Kohlenstoffatome durch Sauerstoff-, Schwefel-und/oder Stickstoffatome ersetzt sind, so handelt es sich dabei beispielsweise um einen Rest eines Triisocyanats, der einen Isocyanuratring enthält, beispielsweise einen N,N',N''-Tris-(hexamethylen)-isocyanuratrest.

Die Reste R₃ bis R₇ sind in der Regel unsubstituiert. Sie können aber ihrerseits auch gegenüber Isocyanaten inerte Substituenten tragen.

Beispiele für gegenüber Isocyanatgruppen inerte Substituenten sind Alkyl, Alkenyl, Alkoxy, Alkylthio, Cycloalkyl, Aryl, Aralkyl, Cyano, Carboxyalkyl oder Halogen.

Beispiele für Alkyl-, Alkenyl-, Cycloalkyl-, Aryl- oder Aralkylgruppen sind weiter oben aufgeführt.

Bedeuten irgendwelche Substituenten Alkyloxy oder Alkylthio, so handelt es sich dabei um verzweigte oder insbesondere um geradkettige Reste. Die Alkylgruppe dieser Reste weist im allgemeinen ein bis zwölf Kohlenstoffatome auf. Bevorzugt werden geradkettige Alkylreste mit ein bis sechs Kohlenstoffatomen, insbesondere Methylreste.

Beispiele für Alkyloxyreste sind Methyloxy, Ethyloxy, n-Propyloxy, Isopropyloxy, n-Butyloxy, n-Pentyloxy und n-Hexyloxy.

Beispiele für Alkylthioreste sind Methylthio, Ethylthio, n-Propylthio, Isopropylthio, n-Butylthio, n-Pentylthio und n-Hexylthio.

Bedeuten irgendwelche Substituenten Carboxyalkylgruppen, so handelt es sich dabei beispielsweise um solche Reste, die als Alkylgruppen die oben für Alkyl beispielhaft aufgezählten Reste aufweisen.

Bedeuten irgendwelche Substituenten Halogen, so handelt es sich dabei beispielsweise um Fluor, Brom oder insbesondere um Chlor.

R₁ ist vorzugsweise ein Rest der Formel II.

R₂ ist vorzugsweise Wasserstoff oder ein Rest der Formel II.

R₃ ist vorzugsweise C₂-C₈Alkylen, ganz besonders bevorzugt Pentylen.

R₄ ist vorzugsweise C₁-C₈Alkylen, das gegebenenfalls zusätzlich ein bis drei Methylsubstituenten trägt. Ganz besonders bevorzugt ist R₄ Propylen.

R₅ ist vorzugsweise C₁-C₄Alkyl oder Phenyl.

R₆ ist vorzugsweise C₁-C₄Alkyl oder zwei Reste R₆ bilden zusammen eine Tri-oder Tetramethylenkette.

R₇ ist vorzugsweise ein Rest der Formeln IVa bis IVd 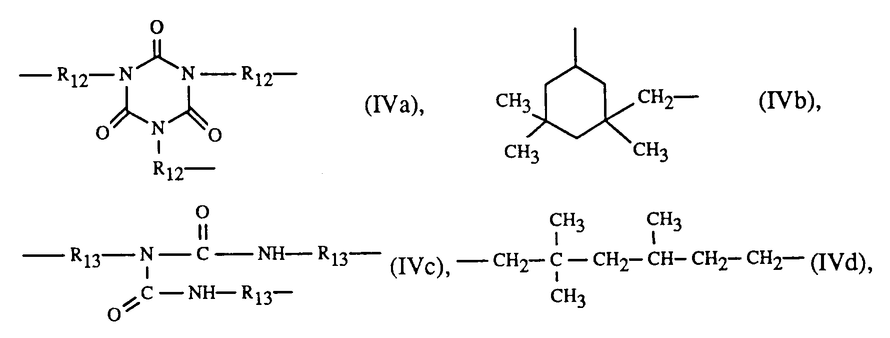
worin R₁₂ und R₁₃ C₂-C₁₂-Alkylen sind, insbesondere Hexamethylen.

Y ist vorzugsweise -O-.

X ist vorzugsweise -S-.

Der Index p ist bevorzugt 1 oder insbesondere 0.

Der Index m ist bevorzugt 1.

Der Index n ist bevorzugt 2 bis 5 oder insbesondere 2.

Bevorzugt werden Verbindungen der Formel Ib, worin m 1 ist und n 2 bedeutet.

Besonders bevorzugt werden Verbindungen der Formel Ia, worin R₁ ein Rest der Formel II ist, R₂ Wasserstoff ist oder einen Rest der Formel II darstellt, R₃ C₂-C₈Alkylen ist, R₄ C₁-C₈Alkylen ist, das unsubstituiert ist oder zusätzlich ein bis drei Methylsubstituenten trägt, R₅ und R₆ C₁-C₄Alkyl bedeuten, Y -O- bedeutet und der Index p 1 oder insbesondere 0 ist.

Besonders bevorzugt werden Verbindungen der Formel Ib, worin R₁ ein Rest der Formel II ist, R₂ Wasserstoff ist oder einen Rest der Formel II darstellt, R₃ C₂-C₈Alkylen ist, R₄ C₁-C₈Alkylen ist, das unsubstituiert ist oder zusätzlich ein bis drei Methylsubstituenten trägt, R₅ und R₆ C₁-C₄Alkyl bedeuten, R₇ ein Rest der Formeln IVa bis IVd ist, Y - O-bedeutet, X -S- ist, der Index p 1 oder insbesondere 0 ist, der Index m 1 ist, und der Index n 2 oder insbesondere 1 ist.

Die Verbindungen der Formel Ia bzw. der Formel Ib lassen sich herstellen, indem man ein Mono- bzw. Polyisocyanat der Formel Va oder Vb 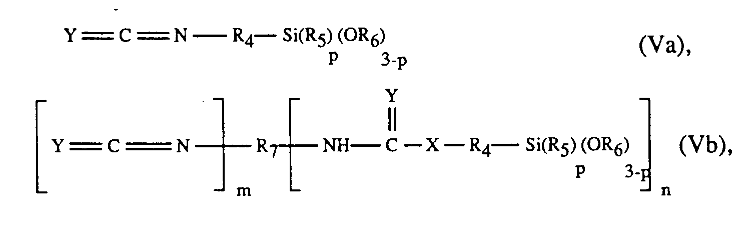
mit einer mindestens der Anzahl der Isocyanatgruppen entsprechenden molaren Menge eines Iminoalkohols der Formel VI umsetzt 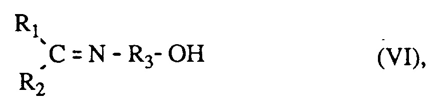
worin R₁ bis R₇, X, Y, m, n und p die oben definierte Bedeutung besitzen.

Die Reaktion erfolgt vorzugsweise in einem inerten organischen Lösungsmittel für beide Reaktionspartner, beispielsweise in einem aromatischen Kohlenwasserstoff, wie Toluol. Die Reaktionstemperatur wird, je nach Reaktivität der Ausgangsprodukte, von etwa 0°C bis zur Rückflusstemperatur des jeweiligen Lösungsmittels gewählt.

Die Verbindungen der Formel Va sind teilweise kommerziell erhältlich oder sie lassen sich durch Phosgenierung an sich bekannter Aminosilane in an sich bekannter Weise herstellen.

Die Verbindungen der Formel Vb sind ebenfalls an sich bekannt. Sie lassen sich erhalten, indem man an sich bekannte Polyisocyanate mit einem Unterschuss an Aminosilanen umsetzt, so dass ein Teil der Isocyanatgruppen für die folgende Umsetzung mit dem Iminoalkohol der Formel VI erhalten bleiben.

Die Herstellung der Verbindungen der Formeln Va und Vb erfolgt beispielsweise durch Erhitzen beider Reaktionspartner, die gegebenenfalls in einem inerten organischen Lösungsmittel gelöst vorliegen, beispielsweise in einem aromatischen Kohlenwasserstoff, wie Toluol. Die Umsetzung erfolgt im allgemeinen bei erhöhter Temperatur, beispielsweise zwischen 80 und 120°C.

Die Verbindungen der Formel VI sind ebenfalls an sich bekannt. Sie lassen sich erhalten, indem man an sich bekannte Aldehyde oder Ketone der Formel R₁-CO-R₂, worin R₁ und R₂ die oben definierte Bedeutung besitzen, mit einer etwa äquivalenten Menge eines an sich bekannten Aminoalkohols der Formel H₂N-R₃-OH umsetzt. Die Reaktion erfolgt vorzugsweise in einem inerten organischen Lösungsmittel für beide Reaktionspartner, beispielsweise einem aromatischen Kohlenwasserstoff, wie Toluol. Die Umsetzung erfolgt zweckmässig bei erhöhter Temperatur, beispielsweise zwischen 80 und 120°C. Das entstehende Reaktionswasser wird vorzugsweise azeotrop entfernt.

Die Verbindungen der Formel Ia und/oder Ib lassen sich als Härter in Polyurethanzusammensetzungen, insbesondere in Einkomponentenformulierungen, einsetzen.

Die Erfindung betrifft daher auch härtbare Zusammensetungen enthaltend
A) eine aliphatische, cycloaliphatische, aromatische oder araliphatische Verbindung mit durchschnittlich mehr als einer Isocyanatgruppe pro Molekül und
B) eine Verbindung der allgemeinen Formel Ia und/oder Ib.

Als Komponente A) lassen sich alle an sich bekannten Polyisocyanate einsetzen.

Bei Komponente A) handelt es sich in der Regel um die den bereits weiter oben beschriebenen R₇ zugrundeliegenden aliphatischen, cycloaliphatischen, aromatischen oder araliphatischen Verbindungen enthaltend mehrere, insbesondere etwa zwei bis etwa vier, Isocyanatgruppen pro Molekül.

Komponente A) enthält im allgemeinen ein präpolymeres Polyisocyanat. Dabei kann es sich beispielsweise um ein Addukt von Polyisocyanaten an eine präpolymere Verbindung enthaltend mehrere, insbesondere zwei oder drei, Gruppen mit aktiven Wasserstoffatomen handeln, wie sie bereits weiter oben bei der Herstellung der R₇ zugrundeliegenden Polyisocyanate beschrieben wurde. Der Begriff "Polyisocyanat" umfasst auch Verbindungen, die von Isocyanaten abgeleitete Gruppen enthalten, welche sich im Verlaufe der Härtungsreaktion wieder in Isocyanatgruppen aufspalten lassen und dann wie diese reagieren. Beispiele dafür sind mit Phenolen, Lactamen oder Ketoximen blockierte Isocyanatgruppen, Urethdiongruppen oder Carbodiimidgruppen.

Beispiele für Polyisocyanat-Präpolymere sind Verbindungen, die durch Verkappen von hydroxyl-terminierten Präpolymeren, insbesondere von Polyestern oder Polyethern, mit niedermolekularen aliphatischen, cylcloaliphatischen, aromatischen oder araliphatischen Poly-, insbesondere Di- oder Triisocyanaten erhältlich sind. Dabei wird die Verkappungskomponente im Ueberschuss vorgelegt, so dass das Produkte freie Isocyanatgruppen oder von Isocyanaten abgeleitete Gruppen aufweist.

Beispiele für niedermolekulare Polyisocyanate sind m-Phenylen-diisocyanat, p-Phenylendiisocyanat, 2,6-Diisocyanatotoluol, 2,4-Diisocyanatotoluol sowie dessen technische Gemische mit 2,6-Diisocyanatotoluol, 1,5-Diisocyanatonaphthalin, 4,4'-Diisocyanatodiphenylmethan sowie technische Gemische verschiedener Diisocyanatodiphenylmethane (beispielsweise der 4,4'- und der 2,4'-Isomeren), urethanisiertes 4,4'-Diisocyanatodiphenylmethan, carbodiimidisiertes 4,4'-Diisocyanatodiphenylmethan, das Urethdion des 2,4-Diisocyanatotoluols, Triisocyanatotriphenylmethan, das Addukt aus Diisocyanatotoluol und Trimethylolpropan, das Trimerisat aus Diisocyanatotoluol, Diisocyanato-m-xylylen, N,N'-Di-(4-methyl-3-isocyanatophenyl)-harnstoff, Mischtrimerisationsprodukte von Diisocyanatotoluol und 1,6-Diisocyanatohexamethylen, 1,6-Diisocyanatohexan, Cyclohexan-1,4-diisocyanat, 3,5,5-Trimethyl-1-isocyanato-3-isocyanatomethylcyclohexan (Isophorondiisocyanat), N,N',N''-Tri-(6-isocyanatohexyl)-biuret, 2,2,4-Trimethyl-1,6-diisocyanatohexan, 1-Methyl-2,4-diisocyanatocyclohexan, 4,4'-Bis-(isocyanato)-3,3'-dimethylbiphenyl, 4,4'-Diisocyanatodicyclohexylmethan, trimeres Isophorondiisocyanat, trimeres Hexandiisocyanat und 2,6-Diisocyanatohexansäuremethylester. Diese Verbindungen sind in der Technik der Polyurethane bekannt und grösstenteils kommerziell erhältlich.

Geeignete präpolymere, hydroxyl-terminierte Polyester leiten sich von Dicarbonsäuren und Dialkoholen ab.

Beispiele für Dicarbonsäuren, von denen sich diese Polyester ableiten, sind gesättigte aliphatische Dicarbonsäuren, wie Bernsteinsäure, Adipinsäure, Sebazinsäure oder dimerisierte Fettsäuren, wie sie beispielsweise unter der Bezeichnung Pripol® im Handel sind; oder ungesättigte aliphatische Dicarbonsäuren, wie Maleinsäure; oder cycloaliphatische Dicarbonsäuren, wie Hexahydrophthal-, oder Tetrahydrophthalsäure; oder aromatische Dicarbonsäuren, wie Phthal-, Isophthal- oder Terephthalsäure.

Beispiele für Dialkohole, von denen sich diese Polyester ableiten, sind Verbindungen mit zwei alkoholischen Hydroxylgruppen und/oder phenolischen Hydroxylgruppen im Molekül, wie aliphatische Dialkohole, z.B. Ethylenglykol, Diethylenglykol und höhere Poly-(oxyethylen)-glykole, Propan-1,3-diol oder höhere Poly-(oxypropylen)-glykole, Butan-1,4-diol oder höhere Poly-(oxybutylen)-glykole oder Hexan-1,6-diol; oder cycloaliphatische Dialkohole, wie 1,3-oder 1,4-Dihydroxycyclohexan oder 1,4-Cyclohexandimethanol; oder Dialkohole enthaltend aromatische Gruppen, wie N,N-Bis-(2-hydroxyethyl)-anilin; oder ein- oder mehrkernige Bisphenole, wie Resorcin, Hydrochinon, Bis-(4-hydroxyphenyl)-methan (Bisphenol F), 2,2-Bis-(4-hydroxyphenyl)-propan (Bisphenol A) oder Bis-(4-hydroxyphenyl)-ether.

Bei den präpolymeren, hydroxyl-terminierten Polyestern kann es sich auch um Polylactone handeln, beispielsweise um das Addukt von ε-Caprolacton an Polyhydroxyl-oder Polyaminverbindungen.

Beispiele für präpolymere, hydroxyl-terminierte Polyether sind Polyalkylenglykole, insbesondere Polypropylen- oder Polybutylenglykole mit einer Funktionalität von zwei oder drei. Diese Präpolymeren sind ebenfalls in der Technik der Polyurethane bekannt und grösstenteils kommerziell erhältlich.

Zur Herstellung der Polyisocyanat-Präpolymeren werden die präpolymeren Verbindungen enthaltend die Gruppen mit aktiven Wasserstoffatomen mit dem überschüssigen Polyisocyanat in an sich bekannter Weise zur Reaktion gebracht. Gegebenenfalls führt man die Reaktion in Gegenwart von niedermolekularen Polyolen oder Polyaminen durch, um auf diese Weise eine Kettenverlängerung zu erreichen. Die Mengenverhältnisse an Reaktionskomponenten werden dabei so gewählt, dass Polyurethan-Präpolymere entstehen, die vorzugsweise einen Isocyanatgehalt von etwa 1 bis 10 Gew.%, bezogen auf das Präpolymere, enthalten. Die Umsetzung erfolgt vorzugsweise in Gegenwart von Katalysatoren der Urethanpolymerisation, wie Sn-Verbindungen, beispielsweise Dibutylzinndilaurat.

Auf 100 Gewichtsteile an Komponente A) setzt man üblicherweise etwa 0,1 bis 20, insbesondere 1 bis 10, Gewichtsteile an Komponente B) ein.

Die Herstellung der erfindungsgemässen Zusammensetzungen kann durch einfaches Vermischen der Komponenten auf den dafür üblichen Einrichtungen erfolgen.

Gewünschtenfalls kann man die erfindungsgemässen Zusammensetzungen mit an sich üblichen Hilfsmitteln oder Zusatzstoffen modifizieren.

Beispiele dafür sind Weichmacher, Streck-, Füll- und Verstärkungsmittel, wie beispielsweise Textilfasern, Glasfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, sowie Flammschutzmittel, Thixotropiemittel, zusätzliche Haftvermittler, Antioxidantien und Lichtschutzmittel.

Ferner kann man den erfindungsgemässen Zusammensetzungen organische Carbon-oder Sulfonsäuren zusetzen, um die Hydrolysegeschwindigkeit der Verbindungen der Formel Ia und Ib zu erhöhen. Pro Aequivalent -C=N-Gruppe verwendet man üblicherweise etwa 1 bis 10 mVal an organischer Carbon- oder Sulfonsäure. Ferner kann man den erfindungsgemässen Zusammensetzungen auch noch Organozinnverbindungen zusetzen.

Die erfindungsgemässen Zusammensetzungen zeichnen sich in Abwesenheit von Feuchtigkeit durch eine erhöhte Lagerstabilität aus.

Die Härtung erfolgt im allgemeinen durch Einwirkung von Feuchtigkeit, insbesondere durch Luftfeuchtigkeit Dies erfolgt im allgemeinen bei Raumtemperatur, beispielsweise bei Temperaturen zwischen 20 und 40°C. Die Härtung kann gewünschtenfalls auch in zwei Stufen vorgenommen werden, indem man zunächst durch Lagern an der Luft vorhärten lässt und anschliessend eine Wasserlagerung durchführt.

Mit den erfindungsgemässen Zusammensetzungen lassen sich insbesondere Ueberzüge, Beschichtungen und Verklebungen herstellen. Sie werden in der dem jeweils speziellen Anwendungsgebiet angepassten Formulierung, beispielswiese als Anstrichmittel, Dichtungs-, Beschichtungs-, Verguss-, Spachtel- oder Verklebungsmasse eingesetzt.

Die Zusammensetzungen lassen sich ohne die bisher übliche Vorbehandlung mit einem Primer auf eine Glasoberfläche aufbringen und geben nach der Härtung Beschichtungen mit einer ausgezeichneten Haftfestigkeit.

Die aus den erfindungsgemässen Zusammensetzungen erhältlichen gehärteten Produkte sowie die Verwendung der härtbaren Zusammensetzungen für die oben erwähnten Zwecke sind ebenfalls Gegenstände der vorliegenden Erfindung.

Die folgenden Beispiele erläutern die Erfindung.

### A. Herstellungsbeispiele

### Beispiel A1: Herstellung von

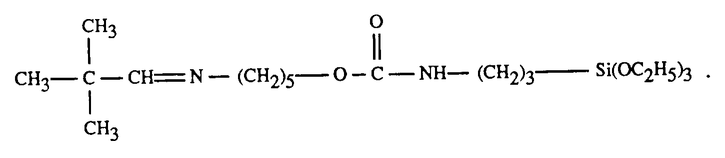

A1.1 Herstellung von

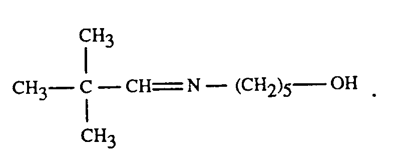

Zu einer Suspension von 80 g (0,77 Mol) 5-Amino-1-pentanol in 250 ml Toluol gibt man 66,8 g (0,77 Mol) Pivalaldehyd. Die erhaltene Lösung wird an einem Wasserabscheider sechs Stunden lang unter Rückfluss erhitzt. Man zieht das Lösungsmittel mit einem Rotationsverdampfer ab und destilliert den Rückstand (K.P.₅₀ _{mbar} 120°C). Man erhält 107 g einer farblosen Flüssigkeit mit den folgenden Analysedaten:
¹H-NMR: d = 7,49 (s, 1H), 3,66-3,29 (m, 5H), 1,74-1,23 (m, 6H) und 1,06 (s, 9H).
¹³C-NMR (in CDCl₃): d = 173,8, 62,0, 61,1, 35,9, 32,3, 30,4, 26,9 und 23,2.

| Elementaranalyse | %C | %H | %N |
|---|---|---|---|
| berechnet | 70,12 | 12,36 | 8,18 |
| gefunden | 69,98 | 12,29 | 8,17. |

A1.2 Umsetzung des Produktes aus Beispiel A1.1
Zu einer Lösung aus 16 g (0,058 Mol) Isocyanatopropyltriethoxysilan in 20 ml trockenem Toluol gibt man eine Lösung von 10 g (0,058 Mol) des Produktes gemäss Beispiel A1.1 in 20 ml trockenem Toluol. Die Lösung wird eine Stunde lang auf 100°C erhitzt. Anschliessend wird das Lösungsmittel bei 90°C und 0,1 mbar im Rotationsverdampfer abgezogen und man erhält 25 g einer Flüssigkeit mit den folgenden Analysedaten: Viskosität (gemessen nach Epprecht bei 25 °C): 10'240 m.Pas.
¹H-NMR (in CDCl₃): d = 7,49 (s, 1H), 4,98 (br, NH), 4,03 (t, J=6 Hz, 2H), 3,80 (q, J=7 Hz, 6H), 3,41-3,06 (m, 4H), 1,76-1,40 (m, 8H), 1,22 (t, J=7Hz, 9H), 1,05 (s, 9H) und 0,70-0,53 (m, 2H).
¹³C-NMR (in CDCl₃): d = 171,8, 156,7, 64,5, 61,0, 58,3, 43,2, 35,8, 30,3, 28,7, 26,8, 23,2, 18,2 und 7,5.

| Elementaranalyse | %C | %H | %N |
|---|---|---|---|
| berechnet | 57,38 | 10,11 | 6,69 |
| gefunden | 57,10 | 9,96 | 7,11. |

### Beispiel A2: Herstellung von

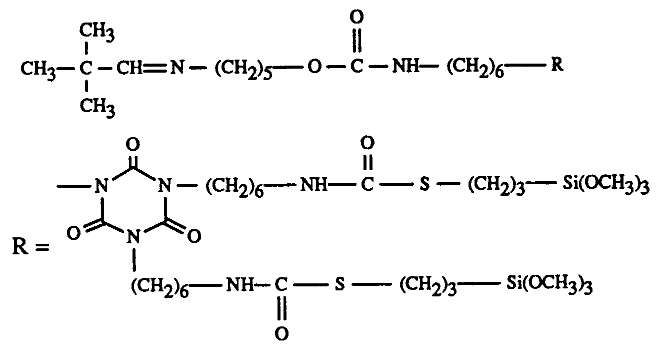

Eine Mischung von 50 g (0,257 Mol NCO) Desmodur® N3200 (Bayer AG) [Trimerisat von Hexamethylendiisocyanat] und 33,7 g (0,171 Mol) 3-Mercaptopropyltrimethoxysilan wird eine Stunde lang auf 140°C erhitzt. Die Mischung wird auf 80°C abkühlen gelassen und dazu tropft man eine Lösung von 14,6 g (0,0857 Mol) des Produktes von Beispiel A1.1 in 100 ml trockenem Toluol. Man erhitzt eine weitere Stunde lang auf 80°C und zieht anschliessend das Lösungsmittel im Rotationsverdampfer bei 90°C und 0,1 mbar ab. Man erhält 98 g eines viskosen Materials, das hauptsächlich die obige Struktur besitzt und folgende Analysedaten aufweist:
Viskosität (gemessen nach Epprecht bei 80 °C): 5'120 m.Pas.
Imingehalt (titrimetrisch): 0,86 Mol/kg (berechnet: 0,87 Mol/kg).
¹H-NMR (ausgewählte chem. Verschiebungen; in CDCl₃): d = 7,49 (s, CH=N), 5,90 (br, S-CO-NH), 4,80 (br, O-CO-NH), 3,56 (s, O-CH₃) und 1,05 (s, CH₃).
¹³C-NMR (ausgewählte chem. Verschiebungen; in CDCl₃): d = 172,0 (CH=N), 167,2 (S-CO-NH), 156,8 (O-CO-NH), 156,3 (Isocyanuratring), 50,4 (O-CH₃), 26,8 (CH₃) und 8,6 (Si-CH₂).

| Elementaranalyse | %C | %H | %N | %S |
|---|---|---|---|---|
| berechnet | 51,71 | 8,40 | 9,18 | 6,00 |
| gefunden | 52,24 | 8,48 | 10,18 | 5,55. |

### Beispiel A3: Herstellung von

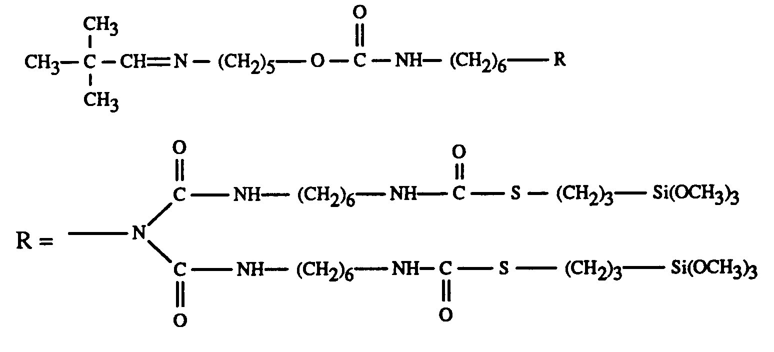

Eine Mischung von 25 g (0,127 Mol NCO) Desmodur® N100 (Bayer AG) [Biuret von Hexamethylendiisocyanat] und 16,7 g (0,085 Mol) 3-Mercaptopropyltrimethoxysilan wird eine Stunde lang auf 140°C erhitzt. Die Mischung wird auf 80°C abkühlen gelassen und dazu tropft man eine Lösung von 7,3 g (0,0425 Mol) des Produktes von Beispiel A1.1 in 50 ml trockenem Toluol. Man erhitzt eine weitere Stunde lang auf 80°C und zieht anschliessend das Lösungsmittel im Rotationsverdampfer bei 90°C und 0,1 mbar ab. Man erhält 48 g eines viskosen Materials das hauptsächlich die obige Struktur besitzt und folgende Analysedaten aufweist:
Viskosität (gemessen nach Epprecht bei 80 °C): 20'480 m.Pas.
Imingehalt (titrimetrisch): 0,80 Mol/kg (berechnet: 0,88 Mol/kg).
¹H-NMR (ausgewählte chem. Verschiebungen; in CDCl₃): d = 7,49 (CH=N), 3,55 (O-CH₃) und 1,05 (CH₃).

| Elementaranalyse | %C | %H | %N | %S |
|---|---|---|---|---|
| berechnet | 51,84 | 8,80 | 9,40 | 6,15 |
| gefunden | 52,40 | 8,74 | 9,64 | 5,85. |

### Beispiel A4: Herstellung von

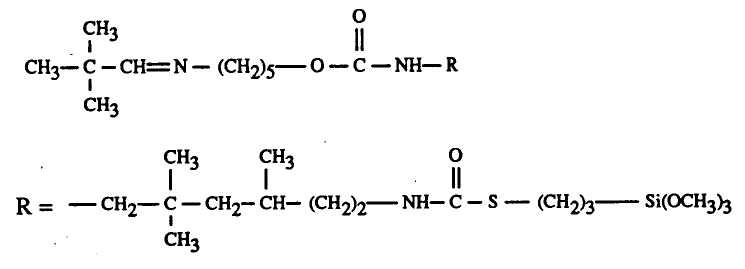

Eine Mischung von 150 g (0,714 Mol) frisch destilliertem 1,6-Diisccyanato-2,2,4-trimethylhexan und 140,2 g (0,714 Mol) 3-Mercaptopropyltrimethoxysilan wird zwei Stunden lang auf 140°C erhitzt. Eine Lösung von 11,8 g (0,029 Mol) dieses Adduktes wird zu einer Lösung von 5 g (0,029 Mol) des Produktes von Beispiel A1.1 in Toluol getropft und die Mischung wird eine weitere Stunde lang auf 100°C erhitzt. Anschliessend zieht man das Lösungsmittel im Rotationsverdampfer bei 90°C und 0,1 mbar ab. Man erhält 16,4 g einer viskosen Flüssigkeit, die hauptsächlich aus dem Addukt gemäss der obigen Struktur besteht und die die folgenden Analysedaten aufweist:
Viskosität (gemessen nach Epprecht bei 25 °C): 15'360 m.Pas.
¹H-NMR (ausgewählte chem. Verschiebungen; in CDCl₃): d = 7,49 (s, CH=N), 3,56 (O-CH₃) und 1,05 (CH₃).
¹³C-NMR (ausgewählte chem. Verschiebungen; in CDCl₃): d = 171,9 (CH=N), 167,3 (S-CO-NH), 156,9 (O-CO-NH) und 8,5 (Si-CH₂).

| Elementaranalyse | %C | %H | %N | %S |
|---|---|---|---|---|
| berechnet | 56,12 | 9,59 | 7,27 | 5,55 |
| gefunden | 55,84 | 9,24 | 7,27 | 5,71. |

### Beispiel A5: Herstellung von

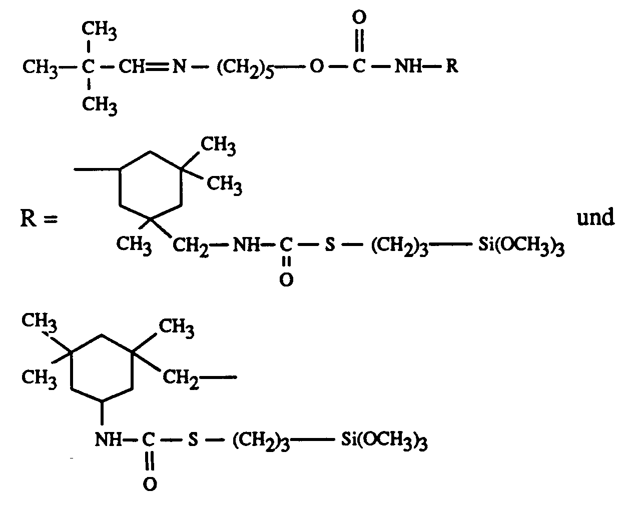

Eine Mischung von 14,3 g (0,064 Mol) Isophorondiisocyanat und 12,6 g (0,064 Mol) 3-Mercaptopropyltrimethoxysilan wird eine Stunde lang auf 140°C erhitzt. Die Lösung wird auf 80°C abkühlen gelassen und eine Lösung von 11 g (0,064 Mol) des Produktes von Beispiel A1.1 in 20 ml Toluol wird zugetropft. Es wird eine weitere Stunde lang auf 80°C erhitzt. Anschliessend zieht man das Lösungsmittel im Rotationsverdampfer bei 90°C und 0,1 mbar ab. Man erhält 37 g einer viskosen Flüssigkeit, die hauptsächlich aus einem Addukt der obigen Struktur besteht und die die folgenden Analysedaten aufweist: Viskosität (gemessen nach Epprecht bei 80 °C): 7'680 m.Pas.
¹H-NMR (ausgewählte chem. Verschiebungen; in CDCl₃): d = 7,49 (s, CH=N), 3,56 (O-CH₃) und 1,05 (CH₃).

| Elementaranalyse | %C | %H | %N |
|---|---|---|---|
| berechnet | 57,01 | 9,40 | 7,12 |
| gefunden | 57,24 | 9,60 | 6,94. |

### B. Anwendungsbeispiele

### Beispiel B1: Herstellung eines Polyurethan-Präpolymeren

Ein isocyanat-terminiertes Präpolymeres wird hergestellt, indem man bei 80 °C zu 150 g Methylendiphenyldiisocyanat (Isocyanate® M125 der Firma Upjohn) innerhalb einer Stunde ein Gemisch aus 531 g trockenem bis-hydroxylterminiertem Polypropylenglykol mit dem Molekulargewicht 2'000 (Desmophen® 1900U der Firma Bayer AG) und 0,3 ml Dibutylzinndilaurat zufliessen lässt. Dann versetzt man mit 2,7 g Trimethylolpropan und rührt weitere zwei Stunden bei 80°C, bis sich ein isocyanat-terminiertes Präpolymer mit einem Isocyanatgehalt von 2,4 Gew.% gebildet hat.

### Beispiele B2-B6: Haftung auf Glas

Zu dem unter Beispiel B1 erhaltenen Präpolymeren werden 5 % trockene pyrogene Kieselsäure (Aerosil® 380) und 5 % Haftvermittler gemäss der folgenden Tabelle 1 gegeben. Dann giesst man auf eine Glasplatte eine 5 mm dicke Polyurethanschicht. Nach zwei Wochen Lagerung an der Luft lagert man diese Proben zwei Wochen in Wasser bei Raumtemperatur. Die Ergebnisse sind in Tabelle 1 zusammengestellt. Dabei bedeuten:
- (--):: die Schicht kann leicht abgezogen werden und die Glasoberfläche bleibt sauber;
- (-):: die Schicht kann mit Mühe abgezogen werden und die Glasoberfläche bleibt sauber;
- (+-):: der grösste Teil der Schicht kann durch Kratzen mit einem Messer entfernt werden;
- (+):: der grösste Teil der Schicht bleibt trotz Kratzen mit einem Messer auf der Glasoberfläche haften;
- (++):: die ganze Schicht bleibt trotz Kratzen mit einem Messer auf der Glasoberfläche haften.

**Tabelle 1**

| Zusammensetzung und Haftung auf Glas von gehärteten Polyyurethan-Präpolymeren enthaltend Iminosilan-Haftvermittler | | |
|---|---|---|
| Beispiel Nr. | Haftvermittler gemäss Beispiel Nr. | Ergebnis der Haftversuche |
| B2 | A1.2 | (++) |
| B3 | A2 | (++) |
| B4 | A3 | (++) |
| B5 | A4 | (+) |
| B6 | A5 | (+) |
| ohne Iminosilan-Haftvermittler | | (--) |

## Patentansprüche (Patentansprüche für folgende(n) Vertragsstaat(en): CH, DE, FR, GB, IT, LI, NL, SE)

1. Verbindungen der allgemeinen Formel Ia oder Ib 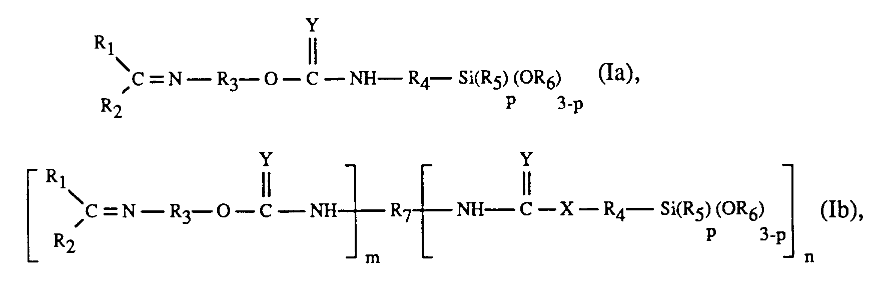 worin R₁ Alkyl, Cycloalkyl oder Aralkyl ist, das zumindest am α-C-Atom gegenüber Isocyanatgruppen inerte Substituenten aufweist, so dass an diesem C-Atom kein Wasserstoffatom vorhanden ist, R₂ eine der für R₁ definierten Bedeutungen annimmt oder Wasserstoff ist, oder R₁ und R₂ zusammen mit dem gemeinsamen C-Atom einen Cyclohexylenring bilden, der an den beiden C-Atomen gegenüber Isocyanatgruppen inerte Substituenten aufweist, R₃ Alkylen oder Cycloalkylen ist, Y -O- oder -S- bedeutet, R₄ Alkylen oder Cycloalkylen ist, R₅ Alkyl, Alkenyl, Cycloalkyl, Aryl oder Aralkyl bedeutet, R₆ Alkyl oder Cycloalkyl ist oder zwei Reste R₆ zusammen auch eine Alkylenkette bilden können, p 0,1 oder 2 ist, m 1 oder 2 ist, n eine ganze Zahl von 1 bis 5 ist, R₇ ein m+n-wertiger linearer oder verzweigter Rest eines Polyisocyanats nach dem Entfernen der Isocyanatgruppen ist und X -S- oder -NH- bedeutet, wobei die Reste R₃ bis R₇ unabhängig voneinander entweder unsubstituiert sind oder gegenüber Isocyanatgruppen inerte Substituenten aufweisen, wobei in Alkylresten R₁, R₂, R₅ und/oder R₆ und/oder in Alkylenresten R₃, R₄ und/oder R₇ ein oder mehrere Kohlenstoffatome durch Sauerstoffatome ersetzt sein können, so dass Polyalkylenglykolreste auftreten, und wobei in cyclischen Resten R₁ bis R₇ ein bis drei Kohlenstoffatome durch Sauerstoff-, Schwefel-und/oder Stickstoffatome ersetzt sein können.

2. Verbindungen der Formel Ia und Ib gemäss Anspruch 1, worin R₁ ein Rest der Formel II ist und R₂ Wasserstoff oder ein Rest der Formel II ist. 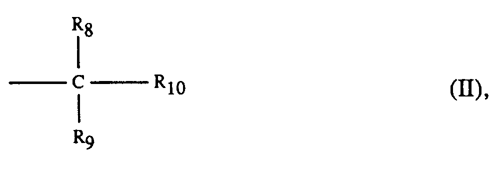 worin R₈ und R₉ gleiches oder unterschiedliches C₁-C₆Alkyl bedeuten und R₁₀ C₁-C₁₂Alkyl ist oder R₁₀ einen der Reste der Formeln IIIa, IIIb oder IIIc darstellt
―O―R₁₁ _{(IIIa),} 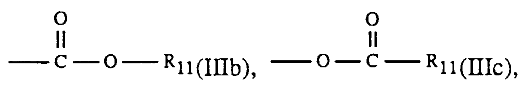
worin R₁₁ C₁-C₁₂Alkyl, Cyclohexyl, Phenyl oder Benzyl bedeutet.

3. Verbindungen der Formel Ia und Ib gemäss Anspruch 1, worin R₃ C₂-C₈Alkylen ist und R₄ C₁-C₈Alkylen bedeutet, das gegebenenfalls zusätzlich ein bis drei Methylsubstituenten trägt.

4. Verbindungen der Formel Ia und Ib gemäss Anspruch 1, worin R₅ C₁-C₄Alkyl oder Phenyl ist und R₆ C₁-C₄Alkyl bedeutet oder zwei Reste R₆ zusammen eine Tri-oder Tetramethylenkette bilden.

5. Verbindungen der Formel Ib gemäss Anspruch 1, Worin R₇ ein Rest der Formeln IVa bis IVd ist 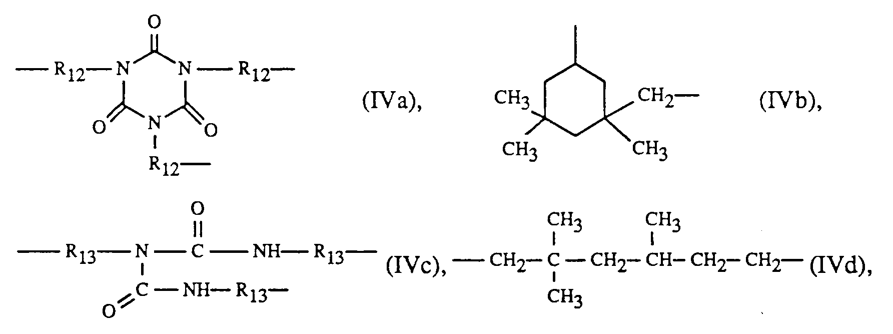 worin R₁₂ und R₁₃ C₂-C₁₂-Alkylen sind.

6. Verbindungen der Formel Ia und Ib gemäss Anspruch 1, worin Y -O- ist, X - S-bedeutet, der Index p 1 oder insbesondere 0 ist, der Index m 1 ist, und der Index n 2 bis 5 oder insbesondere 2 ist.

7. Verbindungen der Formel Ib gemäss Anspruch 1, worin m 1 ist und n 2 bedeutet.

8. Verbindungen der Formel Ia gemäss Anspruch 1, worin R₁ ein Rest der Formel II gemäss Anspruch 2 ist, R₂ Wasserstoff ist oder einen Rest der Formel II gemäss Anspruch 2 darstellt, R₃ C₂-C₈Alkylen ist, R₄ C₁-C₈Alkylen ist, das unsubstituiert ist oder zusätzlich ein bis drei Methylsubstituenten trägt, R₅ und R₆ C₁-C₄Alkyl bedeuten, Y - O-bedeutet und der Index p 1 oder insbesondere 0 ist.

9. Verbindungen der Formel Ib gemäss Anspruch 1, worin R₁ ein Rest der Formel II gemäss Anspruch 2 ist, R₂ Wasserstoff ist oder einen Rest der Formel II gemäss Anspruch 2 darstellt, R₃ C₂-C₈Alkylen ist, R₄ C₁-C₈Alkylen ist, das unsubstituiert ist oder zusätzlich ein bis drei Methylsubstituenten trägt, R₅ und R₆ C₁-C₄Alkyl bedeuten, R₇ ein Rest der Formeln IVa bis IVd gemäss Anspruch 5 ist, Y -O- bedeutet, X -S- ist, der Index p 1 oder insbesondere 0 ist, der Index m 1 ist und der Index n 2 oder insbesondere 1 ist.

10. Verfahren zur Herstellung von Verbindungen der Formel Ia oder Ib gemäss Anspruch 1 umfassend die Umsetzung eines Mond- oder Polyisocyanats der Formel Va oder Vb 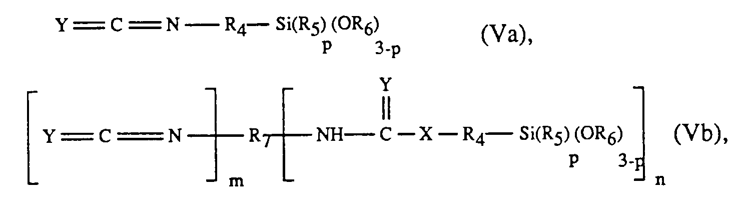 mit einer mindestens der Anzahl der Isocyanatgruppen entsprechenden molaren Menge eines Iminoalkohols der Formel VI 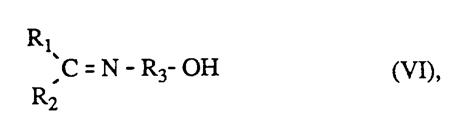 worin R₁ bis R₇, X, Y, m, n und p die in Anspruch 1 definierte Bedeutung besitzen.

11. Härtbare Zusammensetzungen enthaltend
A) eine aliphatische, cycloaliphatische, aromatische oder araliphatische Verbindung mit durchschnittlich mehr als einer Isocyanatgruppe pro Molekül und
B) eine Verbindung der allgemeinen Formel Ia und/oder Ib gemäss Anspruch 1.

12. Zusammensetzungen gemäss Anspruch 11, dadurch gekennzeichnet, dass auf 100 Gewichtsteile an Komponente A) etwa 0,1 bis 20, insbesondere 1 bis 10, Gewichtsteile an Komponente B) entfallen.

13. Zusammensetzungen gemäss Anspruch 11, dadurch gekennzeichnet, dass diese zusätzlich eine die Hydrolysegeschwindigkeit der Verbindungen der Formel Ia und Ib erhöhende Menge einer organischen Carbon- oder Sulfonsäure enthalten.

14. Gehartete Produkte erhältlich durch Einwirkung von Feuchtigkeit auf die Zusammensetzungen gemäss Anspruch 11.

15. Verwendung der Verbindungen der Formel Ia oder Ib gemäss Anspruch 1 oder der Zusammensetzungen gemäss Anspruch 11 zur Herstellung von Ueberzügen, Beschichtungen und Verklebungen.

## Patentansprüche (Patentansprüche für folgende(n) Vertragsstaat(en): ES)

1. Verfahren zur Herstellung von Verbindungen der allgemeinen Formel Ia oder Ib 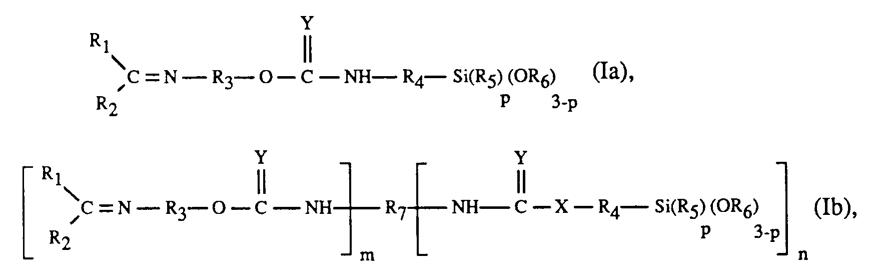 worin R₁ Alkyl, Cycloalkyl oder Aralkyl ist, das zumindest am C-Atom gegenüber Isocyanatgruppen inerte Substituenten aufweist, so dass an diesem C-Atom kein Wasserstoffatom vorhanden ist, R₂ eine der für R₁ definierten Bedeutungen annimmt oder Wasserstoff ist, oder R₁ und R₂ zusammen mit dem gemeinsamen C-Atom einen Cyclohexylenring bilden, der an den beiden C-Atomen gegenüber Isocyanatgruppen inerte Substituenten aufweist, R₃ Alkylen oder Cycloalkylen ist, Y -O- oder - S- bedeutet, R₄ Alkylen oder Cycloalkylen ist, R₅ Alkyl, Alkenyl, Cycloalkyl, Aryl oder Aralkyl bedeutet, R₆ Alkyl oder Cycloalkyl ist oder zwei Reste R₆ zusammen auch eine Alkylenkette bilden können, p 0, 1 oder 2 ist, m 1 oder 2 ist, n eine ganze Zahl von 1 bis 5 ist, R₇ ein m+n-wertiger linearer oder verzweigter Rest eines Polyisocyanats nach dem Entfernen der Isocyanatgruppen ist und X -S- oder -NH- bedeutet, wobei die Reste R₃ bis R₇ unabhängig voneinander entweder unsubstituiert sind oder gegenüber Isocyanatgruppen inerte Substituenten aufweisen, wobei in Alkylresten R₁, R₂, R₅ und/oder R₆ und/oder in Alkylenresten R₃, R₄ und/oder R₇ ein oder mehrere Kohlenstoffatome durch Sauerstoffatome ersetzt sein können, so dass Polyalkylenglykolreste auftreten, und wobei in cyclischen Resten R₁ bis R₇ ein bis drei Kohlenstoffatome durch Sauerstoff-, Schwefel- und/oder Stickstoffatome ersetzt sein können,
dadurch gekennzeichnet, dass man ein Mono- oder Polyisocyanat der Formel Va oder Vb 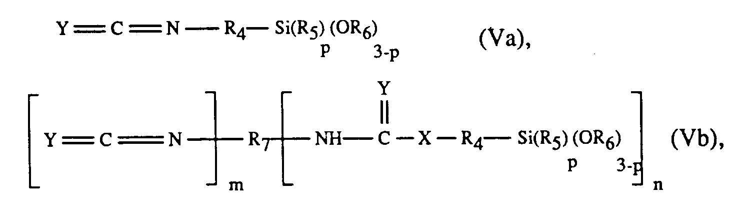 mit einer mindestens der Anzahl der Isocyanatgruppen entsprechenden molaren Menge eines Iminoalkohols der Formel VI umsetzt 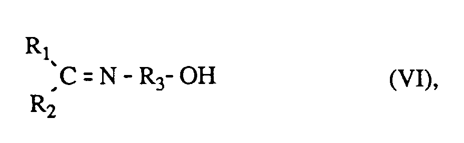
worin R₁ bis R₇, X, Y, m, n und p die oben definierte Bedeutung besitzen.

2. Verfahren zur Herstellung von Verbindungen der Formel Ia und Ib gemäss Anspruch 1, worin R₁ ein Rest der Formel II ist und R₂ Wasserstoff oder ein Rest der Formel II ist 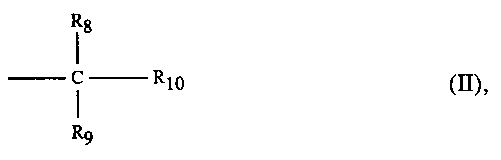 worin R₈ und R₉ gleiches oder unterschiedliches C₁-C₆Alkyl bedeuten und R₁₀ C₁-C₁₂Alkyl ist oder R₁₀ einen der Reste der Formeln IIIa, IIIb oder IIIc darstellt
―O―R₁₁ _{(IIIa),} 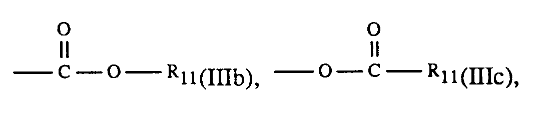
worin R₁₁ C₁-C₁₂Alkyl, Cyclohexyl, Phenyl oder Benzyl bedeutet.

3. Verfahren zur Herstellung von Verbindungen der Formel Ia und Ib gemäss Anspruch 1, worin R₃ C₂-C₈Alkylen ist und R₄ C₁-C₈Alkylen bedeutet, das gegebenenfalls zusätzlich ein bis drei Methylsubstituenten trägt.

4. Verfahren zur Herstellung von Verbindungen der Formel Ia und Ib gemäss Anspruch 1, worin R₅ C₁-C₄Alkyl oder Phenyl ist und R₆ C₁-C₄Alkyl bedeutet oder zwei Reste R₆ zusammen eine Tri- oder Tetramethylenkette bilden.

5. Verfahren zur Herstellung von Verbindungen der Formel Ib gemäss Anspruch 1, worin R₇ ein Rest der Formeln IVa bis IVd ist 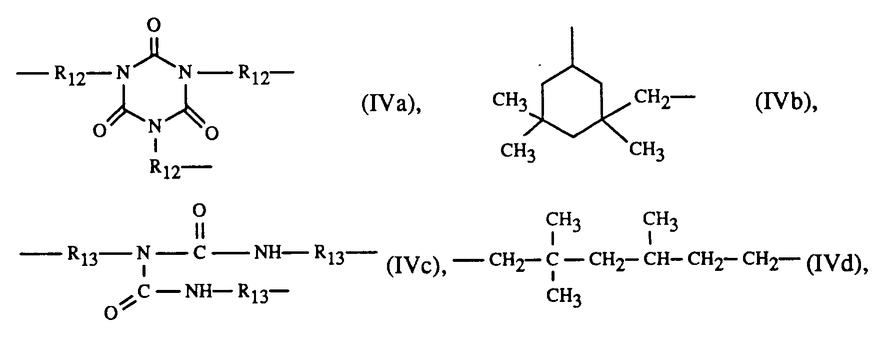 worin R₁₂ und R₁₃ C₂-C₁₂-Alkylen sind.

6. Verfahren zur Herstellung von Verbindungen der Formel Ia und Ib gemäss Anspruch 1, worin Y -O- ist, X -S- bedeutet, der Index p 1 oder insbesondere 0 ist, der Index m 1 ist, und der Index n 2 bis 5 oder insbesondere 2 ist.

7. Verfahren zur Herstellung von Verbindungen der Formel Ib gemäss Anspruch 1, worin m 1 ist und n 2 bedeutet.

8. Verfahren zur Herstellung von Verbindungen der Formel Ia gemäss Anspruch 1, worin R₁ ein Rest der Formel II gemäss Anspruch 2 ist, R₂ Wasserstoff ist oder einen Rest der Formel II gemäss Anspruch 2 darstellt, R₃ C₂-C₈Alkylen ist, R₄ C₁-C₈Alkylen ist, das unsubstituiert ist oder zusätzlich ein bis drei Methylsubstituenten trägt, R₅ und R₆ C₁-C₄Alkyl bedeuten, Y -O- bedeutet und der Index p 1 oder insbesondere 0 ist.

9. Verfahren zur Herstellung von Verbindungen der Formel Ib gemäss Anspruch 1, worin R₁ ein Rest der Formel II gemäss Anspruch 2 ist, R₂ Wasserstoff, ist oder einen Rest der Formel II gemäss Anspruch 2 darstellt, R₃ C₂-C₈Alkylen ist, R₄ C₁-C₈Alkylen ist, das unsubstituiert ist oder zusätzlich ein bis drei Methylsubstituenten trägt, R₅ und R₆ C₁-C₄Alkyl bedeuten, R₇ ein Rest der Formeln IVa bis IVd gemäss Anspruch 5 ist, Y - O-bedeutet, X -S- ist, der Index p 1 oder insbesondere 0 ist, der Index m 1 ist und der Index n 2 oder insbesondere 1 ist.

10. Härtbare Zusammensetzungen enthaltend
A) eine aliphatische, cycloaliphatische, aromatische oder araliphatische Verbindung mit durchschnittlich mehr als einer Isocyanatgruppe pro Molekül und
B) eine Verbindung der allgemeinen Formel Ia und/oder Ib gemäss Anspruch 1.

11. Zusammensetzungen gemäss Anspruch 10, dadurch gekennzeichnet, dass auf 100 Gewichtsteile an Komponente A) etwa 0,1 bis 20, insbesondere 1 bis 10, Gewichtsteile an Komponente B) entfallen.

12. Zusammensetzungen gemäss Anspruch 11, dadurch gekennzeichnet, dass diese zusätzlich eine die Hydrolysegeschwindigkeit der Verbindungen der Formel Ia und Ib erhöhende Menge einer organischen Carbon- oder Sulfonsäure enthalten.

13. Gehärtete Produkte erhältlich durch Einwirkung von Feuchtigkeit auf die Zusammensetzungen gemäss Anspruch 11.

14. Verwendung der Verbindungen der Formel Ia oder Ib gemäss Anspruch 1 oder der Zusammensetzungen gemäss Anspruch 11 zur Herstellung von Ueberzügen, Beschichtungen und Verklebungen.

## Claims (Claims for the following Contracting State(s): CH, DE, FR, GB, IT, LI, NL, SE)

1. A compound of the general formula Ia or Ib 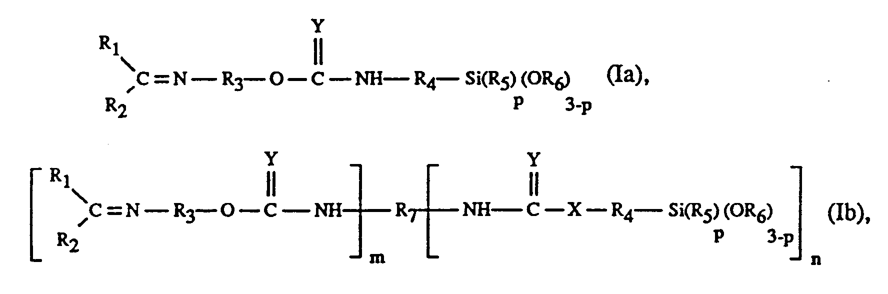 in which R₁ is alkyl, cycloalkyl or aralkyl containing at least on the α-C atom substituents which are inert towards isocyanate groups, so that no hydrogen atom is present on this C atom, R₂ is as defined for R₁ or is hydrogen, R₁ and R₂, together with the common C atom, form a cyclohexylene ring which contains on the two C atoms substituents which are inert towards isocyanate groups, R₃ is alkylene or cycloalkylene, Y is -O- or -S-, R₄ is alkylene or cycloalkylene, R₅ is alkyl, alkenyl, cycloalkyl, aryl or aralkyl, R₆ is alkyl or cycloalkyl, or two radicals R₆ together can also form an alkylene chain, p is 0, 1 or 2, m is 1 or 2, n is an integer from 1 to 5, R₇ is an m+n-valent linear or branched radical of a polyisocyanate after removal of the isocyanate groups and X is -S- or -NH-, and in which the radicals R₃ to R₇ independently of one another either are unsubstituted or contain substituents which are inert towards isocyanate groups, and in which, in alkyl radicals R₁, R₂, R₅ and/or R₆ and/or in alkylene radicals R₃, R₄ and/or R₇, one or more carbon atoms can be replaced by oxygen atoms, so that polyalkylene glycol radicals occur, and in which, in cyclic radicals R₁ to R₇, one to three carbon atoms can be replaced by oxygen atoms, sulfur atoms and/or nitrogen atoms.

2. A compound of the formula Ia or Ib according to claim 1, in which R₁ is a radical of the formula II and R₂ is hydrogen or a radical of the formula II 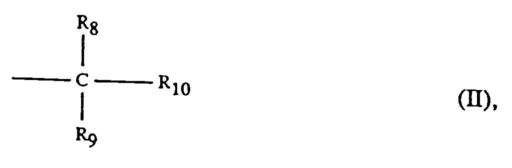 in which R₈ and R₉ are identical or different C₁-C₆alkyl and R₁₀ is C₁-C₁₂alkyl, or R₁₀ is one of the radicals of the formulae IIIa, IIIb or IIIc
―O―R₁₁ _{(IIIa),} 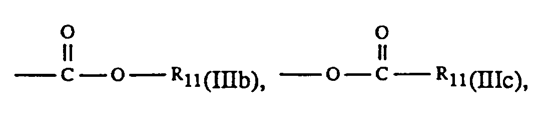
in which R₁₁ is C₁-C₁₂alkyl, cyclohexyl, phenyl or benzyl.

3. A compound of the formula Ia or Ib according to claim 1, in which R₃ is C₂-C₈alkylene and R₄ is C₁-C₈alkylene which is unsubstituted or additionally carries one to three methyl substituents.

4. A compound of the formula Ia or Ib according to claim 1, in which R₅ is C₁-C₄alkyl or phenyl and R₆ is C₁-C₄alkyl, or two radicals R₆ together form a tri- or tetramethylene chain.

5. A compound of the formula Ib according to claim 1, in which R₇ is a radical of the formula IVa or IVd 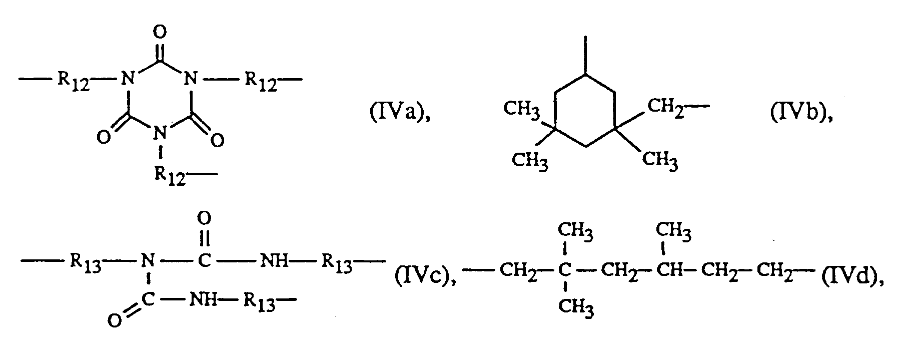 in which R₁₂ and R₁₃ are C₂-C₁₂alkylene.

6. A compound of the formula Ia or Ib according to claim 1, in which Y is -O-, X is -S-, the index p is 1 or in particular 0, the index m is 1 and the index n is 2 to 5, or in particular 2.

7. A compound of the formula Ib according to claim 1, in which m is 1 and n is 2.

8. A compound of the formula Ia according to claim 1, in which R₁ is a radical of the formula II according to claim 2, R₂ is hydrogen or a radical of the formula II according to claim 2, R₃ is C₂-C₈alkylene, R₄ is C₁-C₈alkylene which is unsubstituted or additionally carries one to three methyl substituents, R₅ and R₆ are C₁-C₄alkyl, Y is -O- and the index p is 1 or in particular 0.

9. A compound of the formula Ib according to claim 1, in which R₁ is a radical of the formula II according to claim 2, R₂ is hydrogen or a radical of the formula II according to claim 2, R₃ is C₂-C₈alkylene, R₄ is C₁-C₈alkylene which is unsubstituted or additionally carries one to three methyl substituents, R₅ and R₆ are C₁-C₄alkyl, R₇ is a radical of the formula IVa to IVd according to claim 5, Y is -O-, X is -S-, the index p is 1 or in particular 0, the index m is 1 and the index n is 2 or in particular 1.

10. A process for the preparation of the compound of the formula Ia or Ib according to claim 1, which comprises reacting a mono- or polyisocyanate of the formula Va or Vb 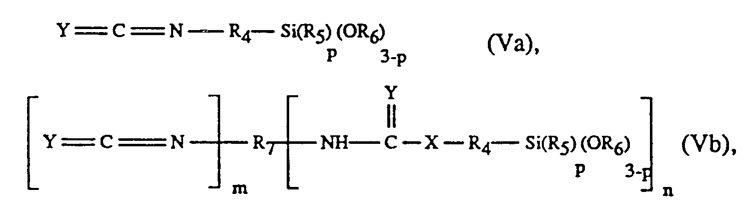 with a molar amount, corresponding at least to the number of isocyanate groups, of an iminoalcohol of the formula VI 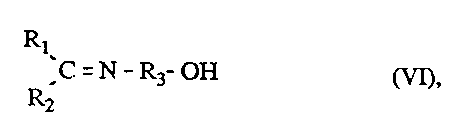 in which R₁ to R₇, X, Y, m, n and p are as defined in claim 1.

11. A curable composition containing
A) an aliphatic, cycloaliphatic, aromatic or araliphatic compound having on average more than one isocyanate group per molecule and
B) a compound of the general formula Ia and/or Ib according to claim 1.

12. A composition according to claim 11, which contains about 0.1 to 20, in particular 1 to 10 parts by weight of component B) per 100 parts by weight of component A).

13. A composition according to claim 11, which additionally contains an organic carboxylic or sulfonic acid in an amount which increases the rate of hydrolysis of a compound of the formula Ia or Ib.

14. A cured product obtainable by the action of moisture on a composition according to claim 11.

15. The use of a compound of the formula Ia or Ib according to claim 1 or of a composition according to claim 11 for the production of coverings, coatings and adhesive bonds.

## Claims (Claims for the following Contracting State(s): ES)

1. A process for the preparation of a compound of the general formula Ia or Ib 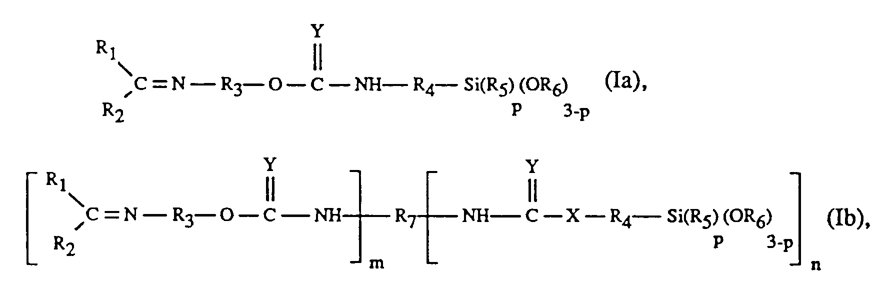 in which R₁ is alkyl, cycloalkyl or aralkyl containing at least on the C atom substituents which are inert towards isocyanate groups, so that no hydrogen atom is present on this C atom, R₂ is as defined for R₁ or is hydrogen, R₁ and R₂, together with the common C atom, form a cyclohexylene ring which contains on the two C atoms substituents which are inert towards isocyanate groups, R₃ is alkylene or cycloalkylene, Y is -O- or -S-, R₄ is alkylene or cycloalkylene, R₅ is alkyl, alkenyl, cycloalkyl, aryl or aralkyl, R₆ is alkyl or cycloalkyl, or two radicals R₆ together can also form an alkylene chain, p is 0, 1 or 2, m is 1 or 2, n is an integer from 1 to 5, R₇ is an m+n-valent linear or branched radical of a polyisocyanate after removal of the isocyanate groups and X is -S- or -NH-, and in which the radicals R₃ to R₇ independently of one another either are unsubstituted or contain substituents which are inert towards isocyanate groups, and in which, in alkyl radicals R₁, R₂, R₅ and/or R₆ and/or in alkylene radicals R₃, R₄ and/or R₇, one or more carbon atoms can be replaced by oxygen atoms, so that polyalkylene glycol radicals occur, and in which, in cyclic radicals R₁ to R₇, one to three carbon atoms can be replaced by oxygen atoms, sulfur atoms and/or nitrogen atoms which comprises reacting a mono- or polyisocyanate of the formula Va or Vb 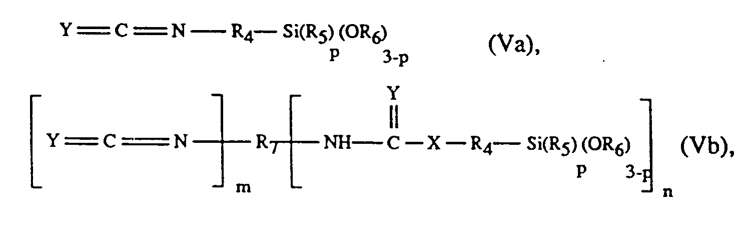 with a molar amount, corresponding at least to the number of isocyanate groups, of an iminoalcohol of the formula VI 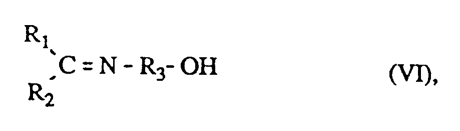 in which R₁ to R₇, X, Y, m, n and p are as defined above.

2. A process for the preparation of a compound of the formula Ia or Ib according to claim 1, in which R₁ is a radical of the formula II and R₂ is hydrogen or a radical of the formula II 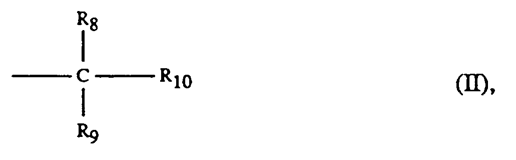 in which R₈ and R₉ are identical or different C₁-C₆alkyl and R₁₀ is C₁-C₁₂alkyl, or R₁₀ is one of the radicals of the formulae IIIa, IIIb or IIIc
―O―R₁₁ _{(IIIa),} 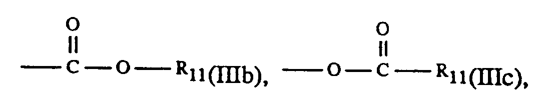
in which R₁₁ is C₁-C₁₂alkyl, cyclohexyl, phenyl or benzyl.

3. A process for the preparation of a compound of the formula Ia or Ib according to claim 1, in which R₃ is C₂-C₈alkylene and R₄ is C₁-C₈alkylene which is unsubstituted or additionally carries one to three methyl substituents.

4. A process for the preparation of a compound of the formula Ia or Ib according to claim 1, in which R₅ is C₁-C₄alkyl or phenyl and R₆ is C₁-C₄alkyl, or two radicals R₆ together form a tri- or tetramethylene chain.

5. A process for the preparation of a compound of the formula Ib according to claim 1, in which R₇ is a radical of the formula IVa to IVd 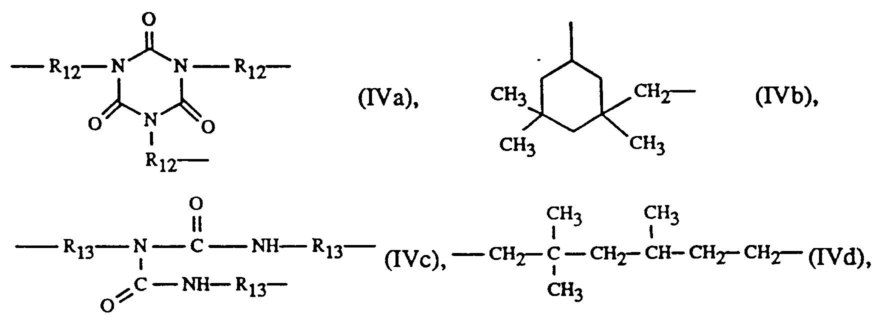 in which R₁₂ and R₁₃ are C₂-C₁₂alkylene.

6. A process for the preparation of a compound of the formula Ia or Ib according to claim 1, in which Y is -O-, X is -S-, the index p is 1 or in particular 0, the index m is 1 and the index n is 2 to 5, or in particular 2.

7. A process for the preparation of a compound of the formula Ib according to claim 1, in which m is 1 and n is 2.

8. A process for the preparation of a compound of the formula Ia according to claim 1, in which R₁ is a radical of the formula II according to claim 2, R₂ is hydrogen or a radical of the formula II according to claim 2, R₃ is C₂-C₈alkylene, R₄ is C₁-C₈alkylene which is unsubstituted or additionally carries one to three methyl substituents, R₅ and R₆ are C₁-C₄alkyl, Y is -O- and the index p is 1 or in particular 0.

9. A process for the preparation of a compound of the formula Ib according to claim 1, in which R₁ is a radical of the formula II according to claim 2, R₂ is hydrogen or a radical of the formula II according to claim 2, R₃ is C₂-C₈alkylene, R₄ is C₁-C₈alkylene which is unsubstituted or additionally carries one to three methyl substituents, R₅ and R₆ are C₁-C₄alkyl, R₇ is a radical of the formula IVa to IVd according to claim 5, Y is -O-, X is -S-, the index p is 1 or in particular 0, the index m is 1 and the index n is 2 or in particular 1.

10. A curable composition containing
A) an aliphatic, cycloaliphatic, aromatic or araliphatic compound having on average more than one isocyanate group per molecule and
B) a compound of the general formula Ia and/or Ib according to claim 1.

11. A composition according to claim 10, which contains about 0.1 to 20, in particular 1 to 10 parts by weight of component B) per 100 parts by weight of component A).

12. A composition according to claim 11, which additionally contains an organic carboxylic or sulfonic acid in an amount which increases the rate of hydrolysis of a compound of the formula Ia or Ib.

13. A cured product obtainable by the action of moisture on a composition according to claim 11.

14. The use of a compound of the formula Ia or Ib according to claim 1 or of a composition according to claim 11 for the production of coverings, coatings and adhesive bonds.

## Revendications (Revendications pour l'(les) Etat(s) contractant(s) suivant(s): CH, DE, FR, GB, IT, LI, NL, SE)

1. Composés de formule générale Ia ou Ib 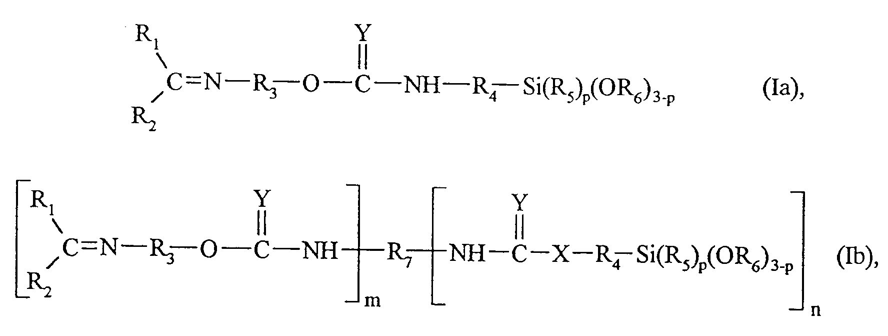 dans lesquelles R₁ représente un reste alkyle, cycloalkyle ou aralkyle qui porte au moins sur l'atome de carbone en α des substituants inertes vis-à-vis des groupes isocyanate, de façon qu'il n'y ait pas d'atome d'hydrogène sur cet atome, R₂ a l'une des significations définies pour R₁ ou est un atome d'hydrogène, ou bien R₁ et R₂ forment ensemble avec l'atome de carbone commun un noyau cyclohexylène qui porte sur les deux atomes de carbone des substituants inertes vis-à-vis des groupes isocyanate, R₃ est un reste alkylène ou cycloalkylène, Y signifie -O- ou -S-, R₄ est un reste alkylène ou cycloalkylène, R₅ est un reste alkyle, alcényle, cycloalkyle, aryle ou aralkyle, R₆ est un reste alkyle ou cycloalkyle, ou bien deux restes R₆ peuvent aussi former ensemble une chaîne alkylène, p est 0, 1 ou 2, m est 1 ou 2, n est un nombre entier de 1 à 5, R₇ est le reste linéaire ou ramifié, de valence m+n, d'un polyisocyanate après l'élimination des groupes isocyanate, et X représente -S- ou - NH-, les restes R₃ à R₇ pouvant indépendamment les uns des autres être non substitués ou porter des substituants inertes vis-à-vis des groupes isocyanate, un ou plusieurs atomes de carbone dans les restes alkyle R₁, R₂, R₅ et/ou R₆ et/ou dans les restes alkylène R₃, R₄ et/ou R₇ pouvant être remplacés par des atomes d'oxygène de façon à former des restes polyalkylèneglycol, et un à trois atomes de carbone dans les restes cycliques R₁ à R₇ pouvant être remplacés par des atomes d'oxygène, de soufre et/ou d'azote.

2. Composés de formule Ia et Ib selon la revendication 1, dans lesquels R₁ est un reste de formule II et R₂ est un atome d'hydrogène ou un reste de formule II 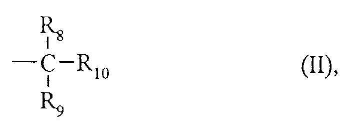 dans laquelle R₈ et R₉ représentent des restes alkyle en C₁-C₆ identiques ou différents et R₁₀ est un reste alkyle en C₁-C₁₂, ou R₁₀ représente l'un des restes de formule IIIa, IIIb ou IIIc
―O―R₁₁ (IIIa), 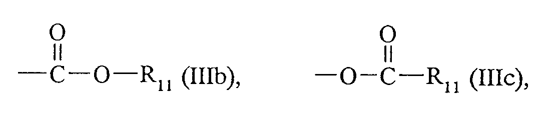
dans lesquelles R₁₁ représente un reste alkyle en C₁-C₁₂, cyclohexyle, phényle ou benzyle.

3. Composés de formule la et Ib selon la revendication 1, dans lesquels R₃ est un reste alkylène en C₂-C₈ et R₄ est un reste alkylène en C₁-C₈ qui éventuellement porte en outre 1 à 3 substituants méthyle.

4. Composés de formule Ia et Ib selon la revendication 1, dans lesquels R₅ est un reste alkyle en C₁-C₄ ou phényle et R₆ est un reste alkyle en C₁-C₄, ou deux restes R₆ forment ensemble une chaîne tri- ou tétraméthylène.

5. Composés de formule Ib selon la revendication 1, dans lesquels R₇ est un reste de formule IVa à IVd 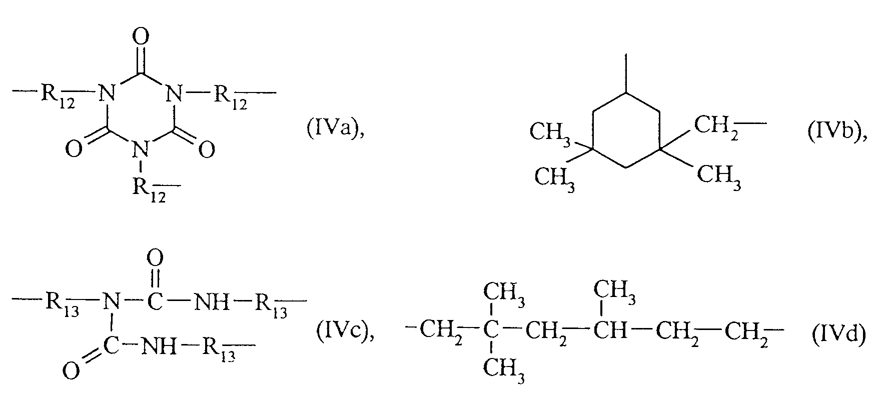 dans lesquelles R₁₂ et R₁₃ sont des restes alkylène en C₂-C₁₂.

6. Composés de formule Ia et Ib selon la revendication 1, dans lesquels Y est -O-, X est -S-, l'indice p est 1 ou en particulier 0, l'indice m est 1 et l'indice n est compris entre 2 et 5 ou est en particulier 2.

7. Composés de formule Ib selon la revendication 1, dans lesquels m est 1 et n est 2.

8. Composés de formule Ia selon la revendication 1, dans lesquels R₁ est un reste de formule II selon la revendication 2, R₂ est un atome d'hydrogène ou un reste de formule II selon la revendication 2, R₃ est un reste alkylène en C₂-C₈, R₄ est un reste alkylène en C₁-C₈, non substitué ou portant en outre 1 à 3 substituants méthyle, R₅ et R₆ représentent des restes alkyle en C₁-C₄, Y est -O-et l'indice p est 1 ou en particulier 0.

9. Composés de formule Ib selon la revendication 1, dans lesquels R₁ est un reste de formule II selon la revendication 2, R₂ est un atome d'hydrogène ou un reste de formule II selon la revendication 2, R₃ est un reste alkylène en C₂-C₈, R₄ est un reste alkylène en C₁-C₈, non substitué ou portant en outre 1 à 3 substituants méthyle, R₅ et R₆ représentent des restes alkyle en C₁-C₄, R₇ est un reste de formule IVa à IVd selon la revendication 5, Y est -O-, X est -S-, l'indice p est 1 ou en particulier 0, l'indice m est 1 et l'indice n est 2 ou en particulier 1.

10. Procédé de préparation de composés de formule Ia ou Ib selon la revendication 1, comprenant la réaction d'un monoisocyanate ou d'un polyisocyanate de formule Va ou Vb
Y=C=N―R₄―Si(R₅)ₚ(OR₆)₃₋ₚ (Va), 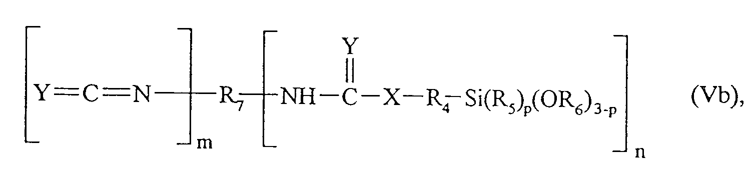
avec un iminoalcool de formule VI 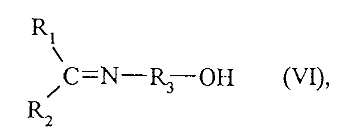 en une quantité en moles correspondant au moins au nombre des groupes isocyanate, R₁ à R₇, X, Y, m, n et p ayant la signification définie dans la revendication 1.

11. Compositions durcissables contenant
A) un composé aliphatique, cycloaliphatique, aromatique ou araliphatique comprenant en moyenne plus d'un groupe isocyanate par molécule et
B) un composé de formule générale Ia et/ou Ib selon la revendication 1.

12. Compositions selon la revendication 11, caractérisées en ce que, à 100 parties en masse de constituant A), correspondent environ 0,1 à 20, en particulier 1 à 10 parties en masse de constituant B).

13. Compositions selon la revendication 11, caractérisées en ce qu'elles contiennent en outre une quantité d'un acide carboxylique ou sulfonique organique augmentant la vitesse d'hydrolyse des composés de formule Ia et Ib.

14. Produits durcis pouvant être obtenus par l'effet de l'humidité sur les compositions selon la revendication 11.

15. Utilisation des composés de formule Ia ou Ib selon la revendication 1 ou des compositions selon la revendication 11 pour la préparation de revêtements, d'enduits et de collages.

## Revendications (Revendications pour l'(les) Etat(s) contractant(s) suivant(s): ES)

1. Procédé de préparation de composés de formule générale Ia ou Ib 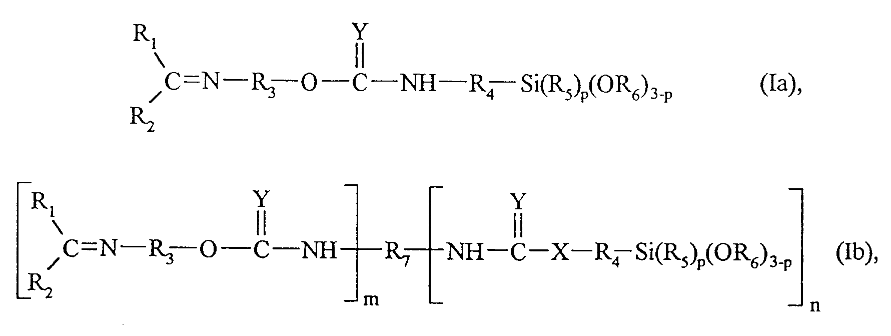 dans lesquelles R₁ représente un reste alkyle, cycloalkyle ou aralkyle qui porte au moins sur l'atome de carbone en α des substituants inertes vis-à-vis des groupes isocyanate, de façon qu'il n'y ait pas d'atome d'hydrogène sur cet atome, R₂ a l'une des significations définies pour R₁ ou est un atome d'hydrogène, ou bien R₁ et R₂ forment ensemble avec l'atome de carbone commun un noyau cyclohexylène qui porte sur les deux atomes de carbone des substituants inertes vis-à-vis des groupes isocyanate, R₃ est un reste alkylène ou cycloalkylène, Y signifie -O- ou -S-, R₄ est un reste alkylène ou cycloalkylène, R₅ est un reste alkyle, alcényle, cycloalkyle, aryle ou aralkyle, R₆ est un reste alkyle ou cycloalkyle, ou bien deux restes R₆ peuvent aussi former ensemble une chaîne alkylène, p est 0, 1 ou 2, m est 1 ou 2, n est un nombre entier de 1 à 5, R₇ est le reste linéaire ou ramifié, de valence m+n, d'un polyisocyanate après l'élimination des groupes isocyanate, et X représente -S- ou - NH-, les restes R₃ à R₇ pouvant indépendamment les uns des autres être non substitués ou porter des substituants inertes vis-à-vis des groupes isocyanate, un ou plusieurs atomes de carbone dans les restes alkyle R₁, R₂, R₅ et/ou R₆ et/ou dans les restes alkylène R₃, R₄ et/ou R₇ pouvant être remplacés par des atomes d'oxygène de façon à former des restes polyalkylèneglycol, et un à trois atomes de carbone dans les restes cycliques R₁ à R₇ pouvant être remplacés par des atomes d'oxygène, de soufre et/ou d'azote,
caractérisé en ce que l'on fait réagir un monoisocyanate ou un polyisocyanate de formule Va ou Vb
Y=C=N―R₄―Si(R₅)ₚ(OR₆)₃₋ₚ (Va), 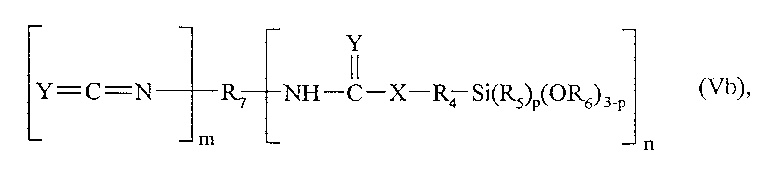
avec un iminoalcool de formule VI 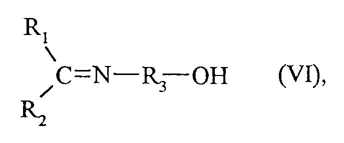 en une quantité en moles correspondant au moins au nombre des groupes isocyanate, R₁ à R₇, X, Y, m, n et p ayant la signification définie ci-dessus.

2. Procédé de préparation de composés de formule Ia et Ib selon la revendication 1, dans lesquels R₁ est un reste de formule II et R₂ est un atome d'hydrogène ou un reste de formule II 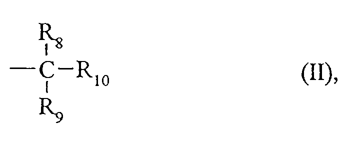 dans laquelle R₈ et R₉ représentent des restes alkyle en C₁-C₆ identiques ou différents et R₁₀ est un reste alkyle en C₁-C₁₂, ou R₁₀ représente l'un des restes de formule IIIa, IIIb ou IIIc
―O―R₁₁ (IIIa), 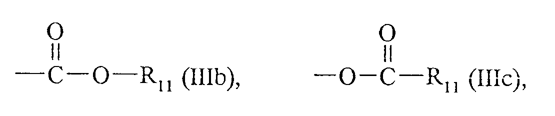
dans lesquelles R₁₁ représente un reste alkyle en C₁-C₁₂, cyclohexyle, phényle ou benzyle.

3. Procédé de préparation de composés de formule Ia et Ib selon la revendication 1, dans lesquels R₃ est un reste alkylène en C₂-C₈ et R₄ est un reste alkylène en C₁-C₈ qui éventuellement porte en outre 1 à 3 substituants méthyle.

4. Procédé de préparation de composés de formule Ia et Ib selon la revendication 1, dans lesquels R₅ est un reste alkyle en C₁-C₄ ou phényle et R₆ est un reste alkyle en C₁-C₄, ou deux restes R₆ forment ensemble une chaîne tri- ou tétraméthylène.

5. Procédé de préparation de composés de formule Ib selon la revendication 1, dans lesquels R₇ est un reste de formule IVa à IVd 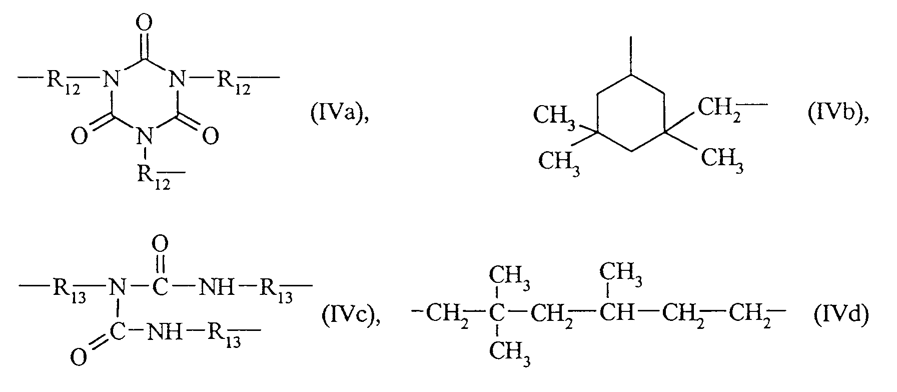 dans lesquelles R₁₂ et R₁₃ sont des restes alkylène en C₂-C₁₂.

6. Procédé de préparation de composés de formule Ia et Ib selon la revendication 1, dans lesquels Y est -O-, X est -S-, l'indice p est 1 ou en particulier 0, l'indice m est 1 et l'indice n est compris entre 2 et 5 ou est en particulier 2.

7. Procédé de préparation de composés de formule Ib selon la revendication 1, dans lesquels m est 1 et n est 2.

8. Procédé de préparation de composés de formule Ia selon la revendication 1, dans lesquels R₁ est un reste de formule II selon la revendication 2, R₂ est un atome d'hydrogène ou un reste de formule II selon la revendication 2, R₃ est un reste alkylène en C₂-C₈, R₄ est un reste alkylène en C₁-C₈, non substitué ou portant en outre 1 à 3 substituants méthyle, R₅ et R₆ représentent des restes alkyle en C₁-C₄, Y est -O- et l'indice p est 1 ou en particulier 0.

9. Procédé de préparation de composés de formule Ib selon la revendication 1, dans lesquels R₁ est un reste de formule II selon la revendication 2, R₂ est un atome d'hydrogène ou un reste de formule II selon la revendication 2, R₃ est un reste alkylène en C₂-C₈, R₄ est un reste alkylène en C₁-C₈, non substitué ou portant en outre 1 à 3 substituants méthyle, R₅ et R₆ représentent des restes alkyle en C₁-C₄, R₇ est un reste de formule IVa à IVd selon la revendication 5, Y est - O-, X est -S-, l'indice p est 1 ou en particulier 0, l'indice m est 1 et l'indice n est 2 ou en particulier 1.

10. Compositions durcissables contenant
A) un composé aliphatique, cycloaliphatique, aromatique ou araliphatique comprenant en moyenne plus d'un groupe isocyanate par molécule et
B) un composé de formule générale Ia et/ou Ib selon la revendication 1.

11. Compositions selon la revendication 10, caractérisées en ce que, à 100 parties en masse de constituant A), correspondent environ 0,1 à 20, en particulier 1 à 10 parties en masse de constituant B).

12. Compositions selon la revendication 10, caractérisées en ce qu'elles contiennent en outre une quantité d'un acide carboxylique ou sulfonique organique augmentant la vitesse d'hydrolyse des composés de formule Ia et Ib.

13. Produits durcis pouvant être obtenus par l'effet de l'humidité sur les compositions selon la revendication 10.

14. Utilisation des composés de formule Ia ou Ib selon la revendication 1 ou des compositions selon la revendication 10 pour la préparation de revêtements, d'enduits et de collages.
